# EUROPÄISCHE PATENTANMELDUNG

(11) **EP 1 998 156 A1**
(43) Veröffentlichungstag der Anmeldung: **03.12.2008**
(21) Anmeldenummer: 08009667.0
(22) Anmeldetag: 28.05.2008
(51) Int. Cl.: G01J 3/28

(54) **Verfahren zur Wellenlängenkalibration eines Spektrometers**

(30) Priorität: 30.05.2007 EP 07109191
(71) Anmelder: Roche Diagnostics GmbH, 68305 Mannheim (DE); F.HOFFMANN-LA ROCHE AG, 4070 Basel (CH)
(72) Erfinder: Lukas, Rene, 8020 Graz (AT); Schappacher, Gudrun, 8010 Graz (AT)

(57) **Zusammenfassung**

Die Erfindung betrifft Verfahren zur Wellenlängenkalibration von Spektrometern, insbesondere Sekundärspektrometern, welche vor allem bei Spektrometern größerer Bandbreite deutlich bessere Kalibrationsgenauigkeiten als die herkömmlichen Peaksucheverfahren erzielen.

Die erfinderischen Verfahren beruhen auf dem Prinzip einer schrittweisen RelativVerschiebung von korrespondierenden Messwertblöcken eines Modell- und Kalibrationsspektrums, wobei bei jedem Verschiebungsschritt ein Korrelationswert berechnet wird. Für jeden Messwertblock wird ein Verschiebungswert ermittelt, bei welchem der Korrelationswert ein Optimum erreicht. Für jeden Messwertblock wird ein Wertepaar, bestehend aus einer Positionsmarkierung des Messwertblocks und dem zugehörigen Verschiebungswert bestimmt. Diese Wertepaare stellen die Stützpunkte für ein Fitting an eine geeignete Zuordnungsfunktion dar. Die so erhaltenen Koeffizienten können direkt als Koeffizienten einer Wellenlängenzuordnung eingesetzt werden oder mit den Koeffizienten einer bestehenden ersten Wellenlängenzuordnung kombiniert werden, indem sie diese beispielsweise ersetzen oder mit den Koeffizienten einer bestehenden ersten Wellenlängenzuordnung verrechnet werden.

## Beschreibung

### Gebiet der Erfindung:

Die Erfindung betrifft Verfahren zur Wellenlängenkalibration von Spektrometern. Insbesondere betrifft die Erfindung Verfahren zur benutzerseitigen Wellenlängenkalibration von Sekundärspektrometern, welche weitgehend bauartgleich mit einem werksseitig vorhandenen Primärspektrometer sind, welches als Standard der Wellenlängenkalibration dient. Die erfindungsgemäßen Verfahren können bevorzugt zur Wellenlängenkalibration von Spektrometern eingesetzt werden, welche ein Detektorarray als Detektionseinheit und Datenverarbeitungsvorrichtungen zur Speicherung und Verarbeitung von Daten besitzen.

### Stand der Technik:

Spektrometer sind im Allgemeinen Vorrichtungen zur Darstellung eines Spektrums und bieten die Möglichkeit, optische Spektren aufzunehmen und auszuwerten. Spektrometer werden u.a. in der chemischen und medizinischen Analytik verbreitet eingesetzt, um Bestandteile einer Flüssigkeit aufgrund ihrer spektralen Eigenschaften bestimmen zu können. Hierzu eingesetzte Spektrometer arbeiten häufig nach dem Polychromatorprinzip, d.h. bei diesen Verfahren wird das eingestrahlte Licht erst nach dem Durchgang durch die Probenflüssigkeit mittels eines Polychromators in seine spektralen Bestandteile aufgespaltet, welche somit gleichzeitig auf ein Detektorarray abgebildet werden können. Hierdurch kann ein gesamtes Spektrum gleichzeitig (simultan) registriert werden (Optical Multichannel Analyzer (OMA) oder Multi Channel Spectrometer (MCS)). Dies stellt einen Vorteil gegenüber konventionellen Monochromator-Systemen dar, bei welchen die Wellenlängen nacheinander durchgescannt werden müssen. Moderne Multi Channel Spektrometer können ein komplettes Spektrum sehr schnell an die Auswerte-Elektronik übergeben. Typische Messzeiten liegen bei wenigen Millisekunden, typische Auflösungen der verwendeten Detektorarrays bei 128, 256, 512, 1024 oder 2048 Pixel/Spektrum. Weitere Vorteile von Polychromator-Spektrometern sind die geringe Anzahl von optischen Bauelementen und der Verzicht auf mechanisch bewegte Teile, wodurch diese deutlich günstiger hergestellt werden können.

Ein typisches Einsatzgebiet für Spektrometer ist beispielsweise die analytische Bestimmung von Hämoglobinderivaten im Blut, die sogenannte CO-Oximetrie. Ein Beispiel für ein solches Spektrometrie-Modul ist das COOX-Modul des cobas b 211 (Roche Diagnostics GmbH, Deutschland) zur Bestimmung von Bilirubin (Bili), Totalhämoglobin (tHb), und der Hämoglobinderivate Oxyhämoglobin (O2Hb), Desoxyhämoglobin (HHb), Carboxyhämoglobin (COHb) und Methämoglobin (MetHb). Die Hämoglobinderivate und Bilirubin werden hierbei spektrophotometrisch auf der Basis des Lambert-Beer'schen Gesetz bestimmt. Das optische System dieses CO-Oximetriemoduls besteht aus Halogenlampe, Spalt, Küvettenhalter mit einer Küvette sowie Polychromator und Detektionseinheit. Das Licht einer Halogenlampe wird mit Hilfe eines Lichtleiters zum Küvettenhalter gelenkt. In der Küvette wird das Licht teilweise von der Probe absorbiert, teilweise durchgelassen. Die Absorption ist charakteristisch für die Zusammensetzung der Probe. Durch einen weiteren Lichtleiter wird das durchgelassene Licht zum Polychromator geleitet, wo es in seine spektralen Bestandteile aufgespaltet und auf der Oberfläche eines photosensitiven Empfängers (CCD-Sensor) abgebildet wird. Aus dem daraus resultierenden elektrischen Signal werden die Absorption und schlussendlich die Konzentrationen der Hämoglobinderivate berechnet. Um eine hohe Zuverlässigkeit im Betrieb zu erreichen, wird der Polychromator mit einer eingebauten Spektrallichtquelle kalibriert. Diese Kalibrierung wird nach jedem Einschalten des Gerätes und mindestens einmal täglich während der Systemkalibrierung automatisch durchgeführt.

Viele analytische Anwendungen für Spektrometer erfordern gerätespezifische Kalibrierungsdaten, die meist zeit- und kostenaufwendig zu erzeugen sind. Zum Beispiel können offenbar identische Instrumente, die von demselben Hersteller hergestellt werden, kleinere Instrumentvariationen aufweisen; solche Variationen sind zu sehen, wenn ein Instrument mit einer Komponente gebaut wird, die leicht von derselben Komponente in einem anderen Instrument abweicht. Darüber hinaus ist ein Kalibrierungssatz für ein von einem Hersteller hergestelltes Instrument im Allgemeinen für ein ähnliches Instrument, das von einem anderen Hersteller hergestellt wird, nicht geeignet. Weiterhin können Reparaturen an einem einzelnen Instrument bewirken, dass die spektrale Antwort des Instruments variiert wird. Wenn ein Instrument altert, kann sich seine spektrale Antwort ändern. Die spektrale Antwort eines Instruments kann weiterhin aufgrund von Schwankungen in der Betriebsumgebung variieren. Bei medizinisch-diagnostischen Anwendungen, die oft eine exakte Analyse von Analyten auch sehr niedriger Konzentration erfordern, kann selbst eine geringe Instrumentenvariation ein nicht akzeptables Fehlerausmaß der Analyse bewirken.

Bei der Entwicklung von auf Spektroskopie beruhenden Analysengeräten für biomedizinische Anwendungen gibt es einen Bedarf für die Herstellung von Hunderten bis zu vielen Tausenden von bauartgleichen Analysengeräten für eine bestimmte Anwendung. Es gibt keine effektive Methode zur schnellen und kostengünstigen geräteindividuellen Kalibrierung für solch große Anzahlen von Instrumenten. Daher werden hier Bemühungen auf das Übertragen von Kalibrierungen von einem Analysengerät auf ein nächstes gerichtet. Praktischerweise wird das dadurch bewerkstelligt, dass werkseitig an einem Primärspektrometer, welches als Standard dient, ein Kalibrationsdatensatz erstellt wird. Dieser wird anschließend auf ein oder viele bauartgleiche Sekundärspektrometer übertragen, welche dann mit diesen Kalibrationsdaten des Primärspektrometers an die Kunden ausgeliefert werden. Wie oben erwähnt, können schon geringe individuelle Unterschiede zwischen Primärspektrometer und Sekundärspektrometer dazu führen, dass die Kalibrationsdaten des Primärspektrometers nicht unverändert auf dem Sekundärspektrometer verwendet werden können, da es sonst gerade bei medizinisch-diagnostischen Anwendungen aufgrund der nicht gerätespezifischen Kalibrationsdaten zu nicht akzeptablen Ungenauigkeiten in der Analytbestimmung kommen kann.
Eine kritische Kalibrationsgröße spektroskopischer Analysesysteme ist die Wellenlängenkalibration, d.h. die Zuordnung der einzelnen Pixel eines aufgenommenen Spektrums zu bestimmten Wellenlängenbereichen, welche auf diese abgebildet werden.

Eine solche Wellenlängenkalibration kann beispielsweise durch eine Wellenlängenzuordnung in Form einer geeigneten Zuordnungsfunktion festgelegt sein, welche beispielsweise in Form eines Polynoms 3. Grades einer bestimmten Pixelnummer x über die Polynomfunktion λ(x) = a₀ + a₁ x + a₂x² + a₃x³ eine Wellenlänge λ, beispielsweise in nm, zuordnet.

Zur Wellenlängenkalibration von Spektrometern sind im Stand der Technik bereits verschiedene Verfahren bekannt:
Bei den konventionellen Wellenlängenkalibrationsverfahren wird anhand eines auf der Detektionseinheit abgebildeten Spektrums beispielsweise einer Neon-Lampe mittels eines Peaksucheverfahrens festgestellt, bei welchem Pixel die jeweiligen Emissionspeaks der Neonlampe, deren exakte Wellenlänge bekannt ist, liegen. Jeder Peak verläuft hierbei in der Regel über mehrere Pixel, wobei das Maximum auch zwischen zwei Pixel fallen kann. Dieser Peak kann durch eine geeignete mathematische Funktion unter Verwendung der Intensitätswerte der Pixel abgebildet werden. Eine Möglichkeit, die Lage des Peaks möglichst exakt zu bestimmen, besteht in einer Integration der verwendeten mathematischen Funktion und anschließender Unterteilung der so bestimmten Fläche unter der Kurve in 2 gleichgroße Teilflächen, wobei das Peakzentrum als jene Pixelnummer definiert wird, bei welcher diese Unterteilungslinie liegt. Hierbei ist es auch möglich, dass das Peakzentrum zwischen zwei realen Pixeln liegt und so auch eine nicht ganzzahlige, virtuelle Pixelnummer als Peakzentrum erhalten werden kann. Auf diese Weise müssen für mehrere Peaks jeweils solche Wertepaare bestehend aus bekannter Wellenlänge und Pixelnummer des jeweiligen Peaks ermittelt werden, welche die Stützpunkte für ein Fitting, beispielsweise an ein Polynom 3. Grades nach der Methode der kleinsten Fehlerquadrate, bilden. Typischerweise werden beim Peaksucheverfahren mindestens 4 bis 8 Peaks für eine ausreichende genaue Wellenlängenkalibration benötigt. Die weiteren Messwertbereiche des Spektrums, in welchen keine ausreichend schmalen Peaks zu finden sind, können bei dieser Methode nicht weiter genutzt werden. Die durch das Fitting ermittelten Koeffizienten, beispielsweise a₀, a₁, a₂, a₃ bei einem Fitting an ein Polynom 3. Grades, stellen gleichzeitig die Koeffizienten einer Wellenlängenlängenzuordnung, beispielsweise nach λ(x) = a₀ + a₁ x + a₂ x² + a₃ x³, dar.

Es gibt eine Vielzahl weiterer Peaksucheverfahren, welche im Stand der Technik eingesetzt werden:
So kann beispielsweise eine Bandbreitenmethode eingesetzt werden, bei welcher zunächst bei einem Peak das Pixel mit dem maximalen Intensitätswert bestimmt wird. Anschließend werden die Pixelnummern bestimmt, bei welchen ein bestimmter Prozentsatz, beispielsweise 70 %, 50 % oder 30 % des maximalen Intensitätswertes erreicht wird. Auch hier können zur Erhöhung der Genauigkeit wiederum Interpolationsverfahren eingesetzt werden, so dass nicht ganzzahlige Pixelnummern als virtuelle Pixelnummern erhalten werden können. Es werden 2 Pixelnummern, eine links und eine rechts des Intensitätsmaximums, erhalten, aus welchen durch Mittelung das gesuchte Peakzentrum erhalten werden kann.

Eine weitere mögliche Methode ist die Parabelmethode. Grundlage dieser Methode ist die Tatsache, dass eine Parabel durch 3 Punkte eindeutig bestimmt werden kann.

Zunächst wird das Pixel des Peaks bestimmt, welches den maximalen Intensitätswert des betrachteten Peaks aufweist. Weiterhin werden die Intensitätswerte der Pixel, welche links und rechts dieses Pixels liegen, bestimmt. Anhand dieser drei Wertepaare kann eine Parabelgleichung bestimmt werden, deren Scheitelpunkt dem Peakzentrum entspricht. Auch hier können zur Erhöhung der Genauigkeit wiederum Interpolationsverfahren eingesetzt werden, so dass nicht ganzzahlige Pixelnummern als virtuelle Pixelnummern erhalten werden können.

US 6,700,661 beschreibt ein Wellenlängenkalibrationsverfahren, bei welchem auf einem Sekundärspektrometer eine definierte Referenzprobe vermessen wird und deren (korrigierter) Spektralverlauf S*sec mit einem auf dem Gerät ebenfalls hinterlegten Referenzspektrum Xsec verglichen wird. Als Wert für die Übereinstimmung der beiden Spektren wird ein sogenannter "Spectral residual"-Wert eingeführt. Zur Wellenlängenkalibration wird die Wellenlängen-Pixelnummer-Relation eingesetzt, bei welcher ein minimaler Wert des "spectral residual"-Werts erreicht wird. Zur Ermittlung dieses Minimalwertes werden iterative Verfahren eingesetzt, um die Wellenlängen-Pixelnummer-Relation zu ermitteln, bei welcher die beste Übereinstimmung von gemessenem Spektrum der Referenzprobe und deren hinterlegtem Referenzspektrum auftritt.

Für die Durchführung einer Wellenlängenkalibration nach diesem Verfahren ist die Messung einer Referenzprobe genau definierter Zusammensetzung unabdingbar. Hierdurch werden zusätzliche Kalibrationslösungen benötigt, deren chargenspezifische Zusammensetzung weitere Variablen in die Kalibration einführt, was wiederum zu Lasten der Kalibriergenauigkeit gehen kann. Bei der hier verwendeten iterativen Methode ist es weiterhin sehr schwierig, eine Wellenlängenzuordnung mit einem Polynom höher als 1. Grades zu bestimmen, wodurch die Genauigkeit einer Kalibration begrenzt ist. Des Weiteren erfordert dieses Verfahren den zusätzlichen Schritt einer Berechnung eines Korrekturspektrums, so dass erhöhte Anforderungen an die Rechenleistung eines damit beauftragten Datenverarbeitungssystems zu stellen sind.

In US 4,866,644 werden Spektrometer beschrieben, welche mit bewegten optischen Elementen wie schwenkbaren Beugungsgittern oder Interferenzfilteranordnungen arbeiten, um das Anregungslicht in seine spektralen Bestandteile zu zerlegen, welche nacheinander in die Probe eingestrahlt werden. Bei solchen Spektrometertypen können insbesondere durch die mechanischen Gitterantriebe und -steuerungen Fehler in der Wellenlängenzuordnung auftreten.

Zur Berücksichtigung solcher Fehler wird eine werkseitig durchgeführte Wellenlängenkalibration und eine spektrale Korrektur eines Sekundärspektrometers im Bezug auf ein Primärspektrometer durchgeführt. Hierzu werden sowohl auf den Primär- als auch auf dem Sekundärspektrometer eine Vielzahl von unterschiedlichen Proben vermessen und anhand dieser Daten spezifische Modellspektren für jede Probenart erstellt. Die Messwerte der verschiedenen Modellspektren werden pro Wellenlänge oder entsprechender Einheit zu einem jeweiligen Set zusammengeführt.
Für jedes Set des Primärspektrums wird eine Korrelationsanalyse mit ca. 5 benachbarten Sets des Sekundärspektrums durchgeführt. Der beste Korrelationswert wird hierbei als Maximalwert bzw. durch Anfitten der Einzelwerte mit einer quadratischen Funktion ermittelt. Dies wird für alle Sets des Primärspektrums nacheinander durchgeführt.
Durch Korrelationsberechnungen mittels einer Funktion 1. Grades zwischen den einzelnen Wertepaaren wird eine neue Wellenlängenzuordnung bestimmt. Hierbei werden als Proben zur Durchführung einer werksseitigen Wellenlängenkalibration natürliche Proben wie Sojabohnen oder Getreide eingesetzt. Eine anwenderseitige Wellenlängenkalibration kann daher aber nur schwierig zu einem späteren Zeitpunkt erfolgen, da solche natürlichen Proben nicht für längere Zeit aufbewahrt werden können, ohne dass sie ihre optischen Eigenschaften ändern. Die Verwendung solcher natürlicher Referenzmaterialen ist weiterhin kritisch, da eine Standardisierung ihrer spektralen Eigenschaften nicht gewährleistet werden kann.

US 5,347,475 beschreibt ein Wellenlängenkalibrationsverfahren, welches auf im wesentlichen monochromatischen Licht beruht, welches exakt definierte atomare Emissionslinien aufweist.

Diese werden zu Wellenlängenkalibrationszwecken herangezogen, indem deren bekannte Position mittels eines Primär - und Sekundärspektrometers jeweils bestimmt wird. Hierbei werden zum Auffinden der Lage der atomaren Emissionslinien Peaksucheverfahren eingesetzt, welche hohe Anforderungen an die Auflösung und Genauigkeit der verwendeten Spektrometer stellen. Die hier beschriebenen Verfahren eignen sich vornehmlich zum Einsatz in hochauflösenden Spektrometern mit einer Auflösung von weniger als 2 nm.

US 5,771,094 beschreibt ein Verfahren zur laufenden Überwachung der Wellenlängenkalibration eines sekundären Spektrometers, indem die Lage eines oder mehrerer im Voraus ausgewählter Peaks oder atomarer Linien aus dem Spektrum des eingestrahlten Lichts ermittelt wird. Hierzu werden herkömmliche Peaksucheverfahren eingesetzt. Aus dem Vergleich der aktuellen Werte mit auf dem Sekundärspektrometer hinterlegten Peakmaxima können so Abweichungen ermittelt und Korrekturmaßnahmen eingeleitet werden. Auch die hier beschriebenen Verfahren stellen hohe Anforderungen an Genauigkeit und Auflösung des Spektrometers, welche atomare Linien auflösen müssen.

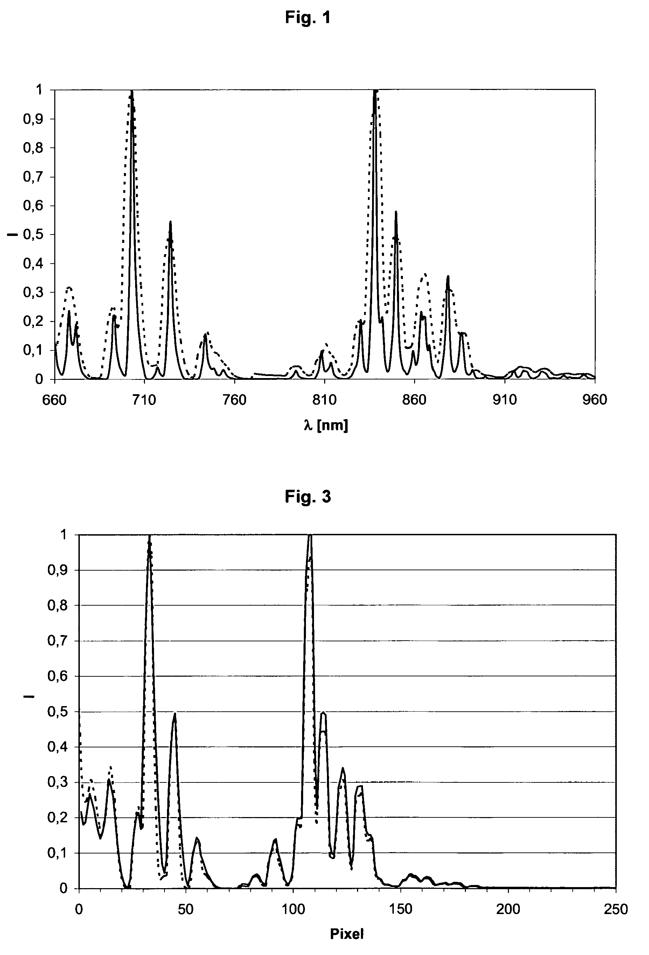

Die zuvor beschriebenen Wellenlängenkalibrationsverfahren haben den großen Nachteil, dass diese systembedingt bisher nur bei hochauflösenden Spektrometern (d.h. Spektrometern mit möglichst geringer Bandbreite) eingesetzt werden können, da nur in solchen ein Spektrum mit ausreichend hoch aufgelösten Peaks erhalten werden kann. Figur 1 zeigt hierzu zwei Spektren derselben Neonlampe im Wellenlängenbereich von 660 nm bis 960 nm. Auf der x-Achse ist die Wellenlänge λ (in nm), auf der y-Achse die auf den Maximalwert normierte Intensität I (in relativen Einheiten) aufgetragen. Das mit einer durchzogenen Linie dargestellte Spektrum wurde mit einem Spektrometer einer Bandbreite von 2,5 nm aufgenommen, das mit der strichlierten Linie dargestellte Spektrum mit einem Spektrometer einer Bandbreite von 8 nm.
Deutlich ist hierbei zu erkennen, dass die zur Wellenlängenkalibration mittels Peaksucheverfahren erforderlichen schmalen Peaks des Neonspektrums nur mit einen hochauflösenden Spektrometer in ausreichender Güte aufgelöst werden können, um eine ausreichende Qualität einer Wellenlängenkalibrierung zu gewährleisten. Bei Spektrometern geringerer Auflösung können die hierzu erforderlichen Peaks nicht mehr entsprechend aufgelöst werden (siehe z.B. nicht aufgelöste Mehrfachpeaks bei 660 - 680 nm bzw. 730 - 760 nm oder Schultern statt aufgelöster Einzelpeaks im Bereich von 680 - 700 nm und 870- 890 nm), worunter die Genauigkeit einer darauf basierenden Wellenlängenkalibration mittels Peaksucheverfahren stark reduziert würde.
Mit den zuvor beschriebenen Peaksucheverfahren, insbesondere nach der Flächenintegralmethode, ist lediglich mit der Verwendung hochwertiger Spektrometern geringer Bandbreite eine Kalibriergenauigkeit von ± 5·10⁻³ nm erreichbar, wie sie insbesondere bei medizinisch-diagnostischen Anwendungen notwendig ist. Die Kalibriergenauigkeit wird hierbei als maximaler Fehler (berechnete Wellenlänge abzüglich der Soll-Wellenlänge) über den gesamten Wellenlängenbereich verstanden.

Infolgedessen wurden bisher bei solchen medizinisch-diagnostischen Analysesystemen nur hochauflösende Spektrometer eingesetzt, welche aufgrund ihrer hohen Anforderungen an die Fertigungsgüte und Auflösung komplex und kostspielig sind. Da, wie zuvor erwähnt, solche Analysesysteme oft in großen Stückzahlen gefertigt werden, stellt diese Einschränkung auf solche Spektrometer einen erheblichen Kostenfaktor bei der Produktion dar.
Daher ist es wünschenswert, für solche Anwendungen Spektrometer mit kleinerer Baugröße und geringerem Preis einzusetzen. Diese weisen jedoch oft schlechtere optische Eigenschaften wie größere Bandbreite und unsymmetrische Peakdarstellung auf. Werden diese Spektrometer anwenderseitig mit einem konventionellen Peaksucheverfahren kalibriert, sind jedoch lediglich Kalibriergenauigkeiten bis zu 1 nm möglich, was für medizinisch-diagnostische Anwendungen nicht ausreichend ist. Werksseitig können zwar Kalibrationsgenauigkeiten von kleiner als 1 nm erreicht werden, doch dies ist mit dem Einsatz sehr teurer Spektrallampen und großem Aufwand verbunden, so dass dies benutzerseitig nicht standardmäßig durchgeführt werden kann. Daher liefern die bisher eingesetzten Peaksucheverfahren bei solchen low-cost Spektrometern keine zufriedenstellenden Ergebnisse.

Weiterhin benötigen konventionelle Wellenlängenkalibrationsverfahren nach dem Peaksucheprinzip zur Kalibrierung oft Spektrallampen oder ähnliche Lichtquellen, welche eine Vielzahl möglichst schmaler Peaks aufweisen. Der Einsatz alternativer und evtl. kostengünstigerer Lichtquellen zur Wellenlängenkalibration ist aufgrund deren Emissionsspektren, welche meist zu wenige und/oder zu breite Emissionspeaks aufweisen, bisher nicht möglich. Aufgrund der optischen Bandbreite der Spektrometer einerseits und der limitierten Anzahl der Peaks von Spektrallampen andererseits stehen hierfür jedoch nur wenige geeignete Peaks zu Verfügung, wodurch die Qualität der Wellenlängenkalibration beschränkt wird, da alle anderen Bereiche des Spektrums nicht zur Bestimmung von Kalibrationswerten verwendet werden können.

### Aufgabe der Erfindung:

Aufgabe der Erfindung ist es somit, alternative Verfahren zur Wellenlängenkalibration bereitzustellen.

Aufgabe der Erfindung ist es insbesondere, Verfahren zur Wellenlängenkalibration bereitzustellen, welche auch bei Verwendung kostengünstiger Spektrometer mit breiterer Bandbreite eine hohe Kalibrationsgenauigkeit gewährleisten und so insbesondere den Einsatz solcher Spektrometer auch in medizinisch-diagnostischen Analysatoren ermöglichen.

Aufgabe der Erfindung ist es weiterhin, Verfahren zur Wellenlängenkalibration bereitzustellen, bei welchen die Verwendung alternativer und evtl. kostengünstiger Lichtquellen möglich ist.

Aufgabe der Erfindung ist es weiterhin, Verfahren zur Wellenlängenkalibration bereitzustellen, bei welchen möglichst auf aufwändige Rechenschritte verzichtet werden kann und welche somit mit einfacheren Datenverarbeitungssystemen durchgeführt werden können.

Aufgabe der Erfindung ist es weiterhin, Verfahren zur Wellenlängenkalibration bereitzustellen, bei welchen auf den Einsatz externer Referenzmedien zur Durchführung der Wellenlängenkalibration verzichtet werden kann.

Aufgabe der Erfindung ist es weiterhin, Verfahren zur Wellenlängenkalibration bereitzustellen, welche ohne zusätzlichen Aufwand im Rahmen üblicher Kalibrationsvorgänge von Spektrometern durchgeführt werden können.

### Erfindungsgemäße Lösung:

Die Lösung dieser Aufgaben erfolgt erfindungsgemäß durch die Bereitstellung eines Verfahrens zur Wellenlängenkalibration gemäß dem Hauptanspruch. Besonders vorteilhafte Ausführungen eines solchen Verfahrens werden in den abhängigen Ansprüchen bereitgestellt.
Allgemein erfolgt dies durch ein Verfahren zur Wellenlängenkalibration eines Spektrometers, auf welchem zumindest die Daten zweier Messwertblöcke eines Modellspektrums vorliegen,
umfassend die Schritte:
a. Bestimmung des Intensitätsspektrums einer Lichtquelle auf dem Spektrometer als Kalibrationsspektrum,
b. Ausschnitt eines Messwertblocks aus dem Kalibrationsspektrum, welcher zu einem der auf dem Spektrometer vorliegenden Messwertblöcke des Modellspektrums korrespondiert,
c. Schrittweise Relativ-Verschiebung des Messwertblocks des Kalibrationsspektrums zum Messwertsblock des Modellspektrums und jeweilige Bestimmung eines Korrelationswertes zwischen den beiden Messwertblöcken,
d. Ermittlung eines Verschiebungswerts, bei welchem der Korrelationswert ein Optimum erreicht,
e. Ermittlung eines Wertepaares bestehend aus Positionsmarkierung des Messwertsblocks des Modellspektrums und dem Verschiebungswert,
f. Wiederholung der Verfahrensschritte b. bis e. für alle weiteren Messwertblöcke des Modellspektrums
g. Fitting der in Verfahrensschritten b. bis f. erhaltenen Wertepaare, bestehend aus Positionsmarkierung des jeweiligen Messwertsblocks des Modellspektrums und dem zugeordneten Verschiebungswert, an eine Zuordnungsfunktion, wodurch die Koeffizienten a₀, a₁... erhalten werden
h. Verwendung dieser Koeffizienten zur Ermittlung einer Wellenlängenzuordnung des Spektrometers

In einer ersten bevorzugten Ausführungsform der Erfindung erfolgt dies durch ein Verfahren zur Wellenlängenkalibration eines Sekundärspektrometers, welches eine Detektionseinheit sowie einen Speicher besitzt, in welchem zumindest die Daten zweier Messwertblöcke eines Modellspektrums, welches auf einem Primärspektrometer als Intensitätsspektrum einer Lichtquelle bestimmt wurde, vorliegen, welches zumindest folgende Schritte umfasst:
a. Bestimmung des Intensitätsspektrums einer Lichtquelle auf dem Sekundärspektrometer als Kalibrationsspektrum, wobei die hierzu eingesetzte Lichtquelle und Detektionseinheit eine vergleichbare Bauart zu der zur Bestimmung des Modellspektrums verwendeten Lichtquelle und Detektionseinheit aufweisen und die Bestimmung des Kalibrationsspektrums unter vergleichbaren Bedingungen wie die Bestimmung des Modellspektrums erfolgt,
b. Ausschnitt eines Messwertblocks aus dem Kalibrationsspektrum, welcher zu einem der im Speicher des Sekundärspektrometer vorliegenden Messwertblöcke des Modellspektrums korrespondiert,
c. Schrittweise Relativ-Verschiebung des Messwertblocks des Kalibrationsspektrums zum Messwertsblock des Modellspektrums um jeweils einen einfachen- oder vielfachen Pixelwert und jeweilige Bestimmung eines Korrelationswertes zwischen den beiden Messwertblöcken, welcher ein Maß für die Übereinstimmung der Intensitätswerte der beiden Messwertblöcke ist,
d. Ermittlung eines Verschiebungswerts als Summe aus der Positionsmarkierung des Messwertblocks und des Abstands zwischen der Positionsmarkierung des Messwertsblocks des Modellspektrums und der korrespondierenden Positionsmarkierung des Kalibrationsspektrums, bei welchem der Korrelationswert ein Optimum erreicht,
e. Ermittlung eines Wertepaares bestehend aus Positionsmarkierung des Messwertsblocks des Modellspektrums und dem Verschiebungswert nach Verfahrensschritt d,
f. Wiederholung der Verfahrensschritte b. bis e. für alle weiteren Messwertblöcke des Modellspektrums
g. Ermittlung einer Wellenlängenzuordnung als eine Zuordnungsfunktion, deren Koeffizienten a₀, a₁... durch Fitting der in Verfahrensschritten b. bis f. erhaltenen Wertepaare, bestehend aus Positionsmarkierung des Messwertsblocks des Modellspektrums und dem zugeordneten Verschiebungswert, erhalten wurden.

In einer zweiten bevorzugten Ausführungsform der Erfindung erfolgt dies durch ein Verfahren zur Wellenlängenkalibration eines Sekundärspektrometers, welches eine Detektionseinheit sowie einen Speicher besitzt, in welchem zumindest die Daten zweier Messwertblöcke eines Modellspektrums, welches auf einem Primärspektrometer als Intensitätsspektrum einer Lichtquelle bestimmt wurde, sowie eine erste Wellenlängenzuordnung in Form einer Zuordnungsfunktion mit den Koeffizienten a₀, a₁... vorliegen, welches zumindest folgende Schritte umfasst:
a. Bestimmung des Intensitätsspektrums einer Lichtquelle auf dem Sekundärspektrometer als Kalibrationsspektrum, wobei die hierzu eingesetzte Lichtquelle und Detektionseinheit eine vergleichbare Bauart zu der zur Bestimmung des Modellspektrums verwendeten Lichtquelle und Detektionseinheit aufweisen und die Bestimmung des Kalibrationsspektrums unter vergleichbaren Bedingungen wie die Bestimmung des Modellspektrums erfolgt,
b. Ausschnitt eines Messwertblocks aus dem Kalibrationsspektrum, welcher zu einem der im Speicher des Sekundärspektrometer vorliegenden Messwertblöcke des Modellspektrums korrespondiert,
c. Schrittweise Relativ-Verschiebung des Messwertblocks des Kalibrationsspektrums zum Messwertsblock des Modellspektrums um jeweils einen einfachen- oder vielfachen Pixelwert und jeweilige Bestimmung eines Korrelationswertes zwischen den beiden Messwertblöcken, welcher ein Maß für die Übereinstimmung der Intensitätswerte der beiden Messwertblöcke ist,
d. Ermittlung eines Verschiebungswerts als Summe aus der Positionsmarkierung des Messwertblocks des Modellspektrums und dem Abstand zwischen der Positionsmarkierung des Messwertsblocks des Modellspektrums und der korrespondierenden Positionsmarkierung des Kalibrationsspektrums, bei welchem der Korrelationswert ein Optimum erreicht,
e. Ermittlung eines Wertepaares bestehend aus Positionsmarkierung des Messwertsblocks des Modellspektrums und dem Verschiebungswert nach Verfahrensschritt d,
f. Wiederholung der Verfahrensschritte b. bis e. für alle weiteren Messwertblöcke des Modellspektrums
g. Ermittlung von Korrekturkoeffizienten a₀', a₁'...durch Fitting der in den Verfahrensschritten b. bis f. erhaltenen Wertepaare, bestehend aus Positionsmarkierung des Messwertsblocks des Modellspektrums und dem zugeordneten Verschiebungswert, an eine Zuordnungsfunktion,
h. Ermittlung einer wellenlängenkalibrierten Wellenlängenzuordnung durch Ersetzen der Koeffizienten a₀, a₁...der ersten Wellenlängenzuordnung mit den entsprechenden in Verfahrensschritt g. ermittelten Korrekturkoeffizienten a₀', a₁'....

In einer dritten bevorzugten Ausführungsform der Erfindung erfolgt dies durch ein Verfahren zur Wellenlängenkalibration eines Sekundärspektrometers, welches eine Detektionseinheit sowie einen Speicher besitzt, in welchem zumindest die Daten zweier Messwertblöcke eines Modellspektrums, welches auf einem Primärspektrometer als Intensitätsspektrum einer Lichtquelle bestimmt wurde, sowie eine erste Wellenlängenzuordnung in Form einer Zuordnungsfunktion mit den Koeffizienten a₀, a₁... vorliegen, welches zumindest folgende Schritte umfasst:
a. Bestimmung des Intensitätsspektrums einer Lichtquelle auf dem Sekundärspektrometer als Kalibrationsspektrum, wobei die hierzu eingesetzte Lichtquelle und Detektionseinheit eine vergleichbare Bauart zu der zur Bestimmung des Modellspektrums verwendeten Lichtquelle und Detektionseinheit aufweisen und die Bestimmung des Kalibrationsspektrums unter vergleichbaren Bedingungen wie die Bestimmung des Modellspektrums erfolgt,
b. Ausschnitt eines Messwertblocks aus dem Kalibrationsspektrum, welcher zu einem der im Speicher des Sekundärspektrometer vorliegenden Messwertblöcke des Modellspektrums korrespondiert,
c. Schrittweise Relativ-Verschiebung des Messwertblocks des Kalibrationsspektrums zum Messwertsblock des Modellspektrums um jeweils einen einfachen- oder vielfachen Pixelwert und jeweilige Bestimmung eines Korrelationswertes zwischen den beiden Messwertblöcken, welcher ein Maß für die Übereinstimmung der Intensitätswerte der beiden Messwertblöcke ist,
d. Ermittlung eines Verschiebungswerts als Abstand zwischen der Positionsmarkierung des Messwertsblocks des Modellspektrums und der korrespondierenden Positionsmarkierung des Kalibrationsspektrums, bei welchem der Korrelationswert ein Optimum erreicht,
e. Ermittlung eines Wertepaares bestehend aus Positionsmarkierung des Messwertsblocks des Modellspektrums und dem Verschiebungswert nach Verfahrensschritt d,
f. Wiederholung der Verfahrensschritte b. bis e. für alle weiteren Messwertblöcke des Modellspektrums,
g. Ermittlung von Korrekturkoeffizienten Δa₀, Δa₁... durch Fitting der in den Verfahrensschritten b. bis f. erhaltenen Wertepaare, bestehend aus Positionsmarkierung des Messwertsblocks des Modellspektrums und dem zugeordneten Verschiebungswert, an eine Zuordnungsfunktion,
h. Ermittlung einer wellenlängenkalibrierten Wellenlängenzuordnung durch Kombination, insbesondere Addition, der in Verfahrensschritt g. ermittelten Korrekturkoeffizienten Δa₀, Δa₁...mit den entsprechenden Koeffizienten a₀, a₁...der ersten Wellenlängenzuordnung.

Diese unterschiedlichen bevorzugten Ausführungsformen beruhen auf der Anwendung des gemeinsamen erfinderischen Prinzips der schrittweisen Relativ-Verschiebung von Messwertblöcken (entspr. Verfahrensschritt c.) eines auf dem Sekundärspektrometer bestimmten Kalibrationsspektrums (entspr. Verfahrensschritt a.) mit den korrespondierenden im Speicher des Sekundärspektrometers vorliegenden Messwertblöcken eines Modellspektrums (entspr. Verfahrensschritt b.), wobei bei jedem Verschiebungsschritt ein Korrelationswert für die Übereinstimmung der Messwertblöcke bestimmt wird (entspr. Verfahrensschritt c.). Erfindungsgemäß wird für jeden Messwertblock des Modellspektrums ein Verschiebungswert ermittelt, bei welchem der Korrelationswert ein Optimum erreicht, d.h. bei welchem die korrespondierenden Messwertblöcke des Modellspektrums und Kalibrationsspektrums am besten übereinstimmen (entspr. Verfahrensschritt d.). Dieser Verschiebungswert gibt an, bei welcher Relativverschiebung der korrespondierenden Messwertblöcke des Modellspektrums und Kalibrationsspektrums die beste Übereinstimmung erzielt wird. Dieser kann im Falle einer optimalen Korrelation bei Verschiebung des Messwertblocks des Kalibrationsspektrums um 2 Pixel nach rechts relativ zum korrespondierenden Messwertblock des Modellspektrums, welcher die Positionsmarkierung Pixel 32 aufweist, beispielsweise in Form des Differenzwertes +2 (entspr. dritte bevorzugte Ausführungsform) oder des Absolutwertes 34 (= Positionsmarkierung Pixel 32 + Relativverschiebung von +2 Pixel) (entspr. erste und zweite bevorzugte Ausführungsform) angegeben werden. Für jeden Messwertblock des Modellspektrums wird ein Wertepaar, bestehend aus der jeweiligen Positionsmarkierung des Messwertblocks des Modellspektrums und dem zugehörigen Verschiebungswert bestimmt (entspr. Verfahrensschritt e.). Diese Wertepaare stellen die Stützpunkte für ein Fitting an eine geeignete Zuordnungsfunktion dar (entspr. Verfahrensschritt g). Die so erhaltenen Koeffizienten a₀, a₁... können nun direkt als Koeffizienten einer Wellenlängenzuordnung eingesetzt werden (entspr. Verfahrensschritt g. der ersten bevorzugten Ausführungsform) oder mit den Koeffizienten einer bestehenden ersten Wellenlängenzuordnung kombiniert werden, indem sie diese beispielsweise ersetzen (entspr. Verfahrensschritt h. der zweiten bevorzugten Ausführungsform) oder mit den Koeffizienten einer bestehenden ersten Wellenlängenzuordnung kombiniert werden (entspr. Verfahrensschritt h. der dritten bevorzugten Ausführungsform).

Im Falle der ersten bevorzugten Ausführungsform des erfindungsgemäßen Verfahrens liegt auf dem Sekundärspektrometer keine erste Wellenlängenzuordnung vor, sondern lediglich mindestens zwei Messwertblöcke eines Modellspektrums, welche aus einer Positionsmarkierung des Messwertblocks und mindestens zwei Wertepaaren, bestehend jeweils aus Pixelnummer und Intensitätswert des Modellspektrums bei dieser Pixelnummer, bestehen. Mittels des erfindungsgemäßen Verfahrens können für diese Messwertblöcke jeweils Wertepaare, bestehend aus der jeweiligen Positionsmarkierung des Messwertblocks des Modellspektrums und dem zugehörigen Verschiebungswert bestimmt werden. In Kombination mit der bekannten Positionsmarkierung der Messwertblöcke des Modellspektrums kann dadurch eine Wellenlängenkalibrierung des Sekundärspektrometers in einer Weise durchgeführt werden, welche den Positionsmarkierungen des Modellspektrums durch die erhaltene Zuordnungsfunktion die entsprechende Lage der korrespondierenden Positionsmarkierung des Kalibrationsspektrums zuordnet. Solche Verfahren können insbesondere dann eingesetzt werden, wenn eine Wellenlängenzuordnung der Pixel zu den entsprechenden Wellenlängen nicht unbedingt nötig ist. So kann es beispielsweise bei manchen Anwendungen ausreichend sein, bestimmte Bereiche miteinander vergleichen zu können, ohne deren exakte Wellenlängenzuordnung zu kennen. In diesen Fällen reicht es aus, dass gewährleistet ist, dass korrespondierende Spektralbereiche betrachtet werden. Dies kann bevorzugt durch ein erfindungsgemäßes Verfahren gemäß der ersten bevorzugten Ausführungsform erzielt werden.

In vielen Fällen liegen für die Sekundärspektrometer bereits Wellenlängenzuordnungen vor. Solche Wellenlängenzuordnungen werden häufig von den Herstellern der Spektrometer mitgeliefert und entsprechen den ersten Wellenlängenzuordnungen im Sinne der vorliegenden Anmeldung. Solche Wellenlängenzuordnungen werden allgemein durch geeignete Zuordnungsfunktionen, zumeist durch ein Polynom mindestens 1. Grades in Form einer Gleichung λ(nm) = a₀ + a₁ x + ... beschrieben, in welchem die Koeffizienten a₀, a₁... die jeweilige Wellenlängenzuordnung der Pixel x bestimmen und somit die Größen darstellen, welche im Rahmen einer Wellenlängenkalibration bestimmt werden müssen. Im Falle bauartgleicher Spektrometer können diese beispielsweise werkseitig auf einem Primärspektrometer, welches als Standard- oder Referenzspektrometer dient, beispielsweise mittels konventioneller Peaksucheverfahren ermittelt und dann unter der Annahme, dass bauartgleiche Spektrometer ähnliche optische Eigenschaften aufweisen, auf die Sekundärspektrometer übertragen und dort als deren erste Wellenlängenzuordnung abgespeichert werden. Durch individuelle Unterschiede der optischen Systeme zwischen dem jeweiligen Sekundärspektrometer und dem Primärspektrometer kann es jedoch zu Abweichungen in deren Abbildungseigenschaften kommen, so dass die ersten Wellenlängenzuordnungen auf dem Sekundärspektrometer nicht mehr zu vergleichbaren Ergebnissen führen. Somit besteht häufig die Notwendigkeit, diese individuellen Unterschiede der Spektrometer durch eine Wellenlängenkalibration des Sekundärspektrometers zu berücksichtigen. Hierzu können die erfindungsgemäßen Verfahren bevorzugt eingesetzt werden.

Eine weitere Möglichkeit, zu einer ersten Wellenlängenzuordnung auf dem Sekundärspektrometer zu gelangen, besteht darin, dieses werksseitig mittels einer Kalibration mit definierten Lichtquellen und/oder definierten Kalibrationslösungen zu kalibrieren. Solche werkseitigen Kalibrationsschritte sind jedoch aufwändig, da sie für jedes hergestellte Sekundärspektrometer individuell durchgeführt werden müssen. In diesem Fall entsprechen die durch die individuelle werkseitige Kalibration gewonnenen Wellenlängenzuordnungen den ersten Wellenlängenzuordnungen im Sinne der vorliegenden Anmeldung. Solche ersten Wellenlängenzuordnungen auf dem Sekundärspektrometer können mittels bekannter Kalibrationsverfahren, insbesondere Peaksucheverfahren, ermittelt werden. Spektrometer haben weiterhin die Eigenschaft, dass sich deren optische Eigenschaften in Abhängigkeit der äußeren Umgebungsbedingungen (Temperatur, mechanische Erschütterungen...) mit der Zeit verändern können. Somit besteht häufig die Notwendigkeit, die hierdurch hervorgerufenen individuellen Unterschiede der Spektrometer durch eine regelmäßige Wellenlängenkalibration des Sekundärspektrometers zu berücksichtigen. Hierzu können die erfindungsgemäßen Verfahren bevorzugt eingesetzt werden.

Im Falle der zweiten bevorzugten Ausführungsform des erfindungsgemäßen Verfahrens werden in Verfahrensschritt g. auf Basis der Wertepaare aus Positionsmarkierung des Messwertsblocks des Modellspektrums und dem Verschiebungswert mittels Fitting an eine Zuordnungsfunktion Korrekturkoeffizienten a₀', a₁'... erhalten. Da der Verschiebungswert in diesem Fall in Verfahrenschritt d. als Summe aus der Positionsmarkierung des Messwertblocks des Modellspektrums und dem Abstand zwischen der Positionsmarkierung des Messwertsblocks des Modellspektrums und der korrespondierenden Positionsmarkierung des Kalibrationsspektrums, bei welchem der Korrelationswert ein Optimum erreicht, bestimmt wird, entspricht er einem Absolutwert, in welchem bereits die ursprüngliche Wellenlängenzuordnung als auch eine mögliche individuelle Wellenlängenverschiebung berücksichtigt ist. In diesem Falle können in Verfahrensschritt h. die Koeffizienten a₀, a₁...der ersten Wellenlängenzuordnung mit den in Verfahrensschritt g. ermittelten Korrekturkoeffizienten a₀', a₁'.... direkt ersetzt werden, so dass hiermit eine wellenlängenkalibrierte Wellenlängenzuordnung, im Falle eines Polynoms als Zuordnungsfunktion beispielsweise in Form einer Gleichung λₖₐₗ(nm) = a₀' + a₁' x + ..., erhalten wird.

Im Falle der dritten bevorzugten Ausführungsform des erfindungsgemäßen Verfahrens werden in Verfahrensschritt g. auf Basis der Wertepaare aus Positionsmarkierung des Messwertsblocks des Modellspektrums und dem Verschiebungswert mittels Fitting an eine Zuordnungsfunktion Korrekturkoeffizienten Δa₀, Δa₁... erhalten. Da der Verschiebungswert in diesem Fall in Verfahrenschritt d. als Abstand zwischen der Positionsmarkierung des Messwertsblocks des Modellspektrums und der korrespondierenden Positionsmarkierung des Kalibrationsspektrums, bei welchem der Korrelationswert ein Optimum erreicht, bestimmt wird, entspricht er einem Differenzwert, in welchem lediglich eine mögliche individuelle Wellenlängenverschiebung berücksichtigt ist. In diesem Falle müssen in Verfahrensschritt h. in Verfahrensschritt g ermittelten Korrekturkoeffizienten Δa₀, Δa₁ noch mit den Koeffizienten a₀, a₁...der ersten Wellenlängenzuordnung kombiniert, insbesondere addiert, werden, um die ursprüngliche Wellenlängenzuordnung ebenfalls mit zu berücksichtigen. Somit wird hierdurch eine wellenlängenkalibrierte Wellenlängenzuordnung, im Falle eines Polynoms als Zuordnungsfunktion beispielsweise in Form einer Gleichung λₖₐₗ(nm) = (a₀ + Δa₀) + (a₁ + Δa₁) x + ..., erhalten.

In besonders bevorzugten Fällen erfolgt die Ermittlung von Korrekturkoeffizienten in Verfahrensschritt g. durch Fitting der Wertepaare, bestehend aus Positionsmarkierung des Messwertblocks des Modellspektrums und dem zugeordneten Verschiebungswert, an eine Zuordnungsfunktion, welche der Zuordnungsfunktion der ersten Wellenlängenzuordnung entspricht. Grundsätzlich muss diese in Verfahrensschritt g. eingesetzte Zuordnungsfunktion jedoch nicht mit der Zuordnungsfunktion der ersten Wellenlängenzuordnung identisch sein. Es ist auch möglich, zwei unterschiedliche Zuordnungsfunktionen zu kombinieren, insbesondere zu addieren. Dies ist insbesondere bei Polynomen als Zuordnungsfunktionen möglich. So können im Falle, dass im Verfahrensschritt g. ein Polynom höherer Ordnung als die des Polynoms der ersten Wellenlängenzuordnung eingesetzt wird, die Koeffizienten des Polynoms der ersten Wellenlängenzuordnung durch die entsprechenden Koeffizienten des im Verfahrensschritt g. eingesetzten Polynoms ersetzt bzw. mit diesen kombiniert, insbesondere addiert, werden und die Koeffizienten des im Verfahrensschritt g. eingesetzten Polynoms, welche keine Entsprechung im Polynom der ersten Wellenlängenzuordnung finden, können als weitere Koeffizienten der wellenlängenkalibrierten Wellenlängenzuordnung hinzugefügt werden. Im Falle, dass im Verfahrensschritt g. ein Polynom geringerer Ordnung als die des Polynoms der ersten Wellenlängenzuordnung eingesetzt wird, können die Koeffizienten des im Verfahrensschritt g. eingesetzten Polynoms die entsprechenden Koeffizienten des Polynoms der ersten Wellenlängenzuordnung ersetzen bzw. mit diesen kombiniert, insbesondere addiert, werden und die zusätzlichen Koeffizienten des Polynoms der ersten Wellenlängenzuordnung, welche im Verfahrensschritt g. eingesetzten Polynom keine Entsprechung finden, können in der wellenlängenkalibrierten Wellenlängenzuordnung auf Null gesetzt werden.

Durch die erfindungsgemäßen Verfahren zur Wellenlängenkalibration eines Sekundärspektrometers werden erstmals Methoden zur Wellenlängenkalibration von Spektrometern bereitgestellt, welche eine vergleichsweise geringe optische Qualität, d.h. eine große Bandbreite, aufweisen. Auch diese oft deutlich kostengünstigeren und kompakteren Spektrometer können mit den erfindungsgemäßen Verfahren mit einer hohen Genauigkeit kalibriert werden und werden so erstmals auch einem Einsatz in medizinisch-diagnostischen Analysatoren zugänglich.

Weiterhin können mit den erfindungsgemäßen Wellenlängenkalibrationsverfahren, welche nicht mehr auf die Verwendung von Kalibrationsspektren mit einer Vielzahl möglichst schmale Peaks als Kalibrationsgrundlage beschränkt sind, nun auch alternativ kostengünstige Lichtquellen eingesetzt werden, welche nicht unbedingt solche peakreichen Spektren liefern müssen. Hierdurch ist beispielsweise der Einsatz breitbandiger Lichtquellen wie Halogenlampen möglich, deren Emissionsspektren für die erfindungsgemäße Verwendung durch die Verwendung von Filtern, beispielsweise Seltenerdmetall-Filtern, noch weiter optimiert werden können.
Da die erfindungsgemäßen Verfahren im Gegensatz zu vielen Verfahren aus dem Stand der Technik nicht auf iterativen und somit rechenleistungsintensiven Methoden beruhen, kann möglichst auf wiederholte aufwändige Rechenschritte verzichtet werden, so dass die erfindungsgemäßen Verfahren mit relativ einfacheren Datenverarbeitungssystemen durchgeführt werden können.

Da bei den erfindungsgemäßen Verfahren das Intensitätsspektrum einer im Spektrometer enthaltenen Lichtquelle zu Wellenlängenkalibrationszwecken herangezogen wird, kann auf den Einsatz zusätzlicher externer Referenzmedien zur Durchführung der Wellenlängenkalibration verzichtet werden kann. Die erfindungsgemäßen Wellenlängenkalibrationsverfahren können automatisiert in kurzer Zeit und regelmäßigen Intervallen durchführt werden, was deutliche Vorteile in Bezug auf Zuverlässigkeit und Benutzerfreundlichkeit bewirkt. So können die erfindungsgemäßen Verfahren zur Wellenlängenkalibration beispielsweise ohne zusätzlichen Aufwand im Rahmen üblicher Kalibrationsvorgänge von Spektrometern automatisch durchgeführt werden, ohne dass Benutzereingriffe stattfinden müssen.

### Definitionen:

Unter Wellenlängenkalibration im Sinne der vorliegenden Anmeldung wird allgemein ein Verfahren verstanden, einem bestimmten Bereich eines mittels der Detektionseinheit aufgenommenen Spektrums den darauf abgebildeten Wellenlängenbereich zuzuordnen. Der jeweilige Bereich des aufgenommenen Spektrums wird allgemein durch die Angabe der entsprechenden Pixel (Zahl und Lage) beschrieben.

Unter Wellenlängenzuordnung im Sinne der vorliegenden Anwendung wird eine Zuordnungsfunktion verstanden, welche einem bestimmten Pixel x eines mittels der Detektionseinheit aufgenommenen Spektrums eine definierte darauf abgebildete Wellenlänge (oder einen definierten kleinen Wellenlängenbereich) zuordnet. Solche Wellenlängenzuordnungen werden zumeist in Form von Polynomfunktionen mindestens 1. Grades durchgeführt. Häufig werden solche Wellenlängenzuordnungen durch Polynomfunktionen 3. Grades beschrieben, welche einer bestimmten Pixelnummer x über die Polynomfunktion λ(x) = a₀ + a₁ x + a₂ x² + a₃ x³ eine Wellenlänge λ zuordnen. Die Koeffizienten a₀, a₁, a₂ und a₃ stellen hierbei die individuellen Kalibrationsparameter dar, deren Werte im Rahmen einer Wellenlängenkalibration bestimmt werden können. Zuordnungsfunktionen können neben den bevorzugten Polynomfunktionen prinzipiell auch andere Funktionstypen sein, welche eine eindeutige Relation zwischen einem bestimmten Pixel und einer darauf abgebildeten Wellenlänge bzw. Wellenlängenbereichs herstellen. Solche Funktionstypen können beispielsweise lineare Funktionen, quadratische Funktionen, kubische Funktionen, Potenzfunktionen, Wurzelfunktionen, rationale oder gebrochen-rationale Funktionen, trigonometrische Funktionen, Arkusfunktionen, Expotentialfunktionen, Logarithmusfunktionen, Hyperbelfunktionen und weitere dem Fachmann bekannte Funktionstypen sein, aus welchen dieser entsprechend den vorliegenden Wertepaaren eine geeignete Funktion auswählen kann.

Unter Primärspektrometer (auch primary- oder master instrument) im Sinne der vorliegenden Anwendung wird ein Referenzspektrometer verstanden, welches als Standard verwendet und auf welchem ein Modellspektrum als Referenz erstellt wird. Auf einem Primärspektrometer können weiterhin Wellenlängenzuordnungen erstellt werden, welche auf bauartgleiche Sekundärspektrometer übertragen werden können und dort ersten Wellenlängenzuordnungen im Sinne der vorliegenden Anmeldung entsprechen. Primärspektrometer stehen meist werkseitig und dienen als Referenzinstrumente zur Kalibrierung vieler bauartgleicher Sekundärspektrometer. Eine Wellenlängenzuordnung des Primärspektrometers kann nach einem Verfahren nach dem Stand der Technik erfolgen (z.B. mittels Peaksucheverfahren).

Unter Sekundärspektrometer (auch secondary-, target-, field- oder slave instrument) im Sinne der vorliegenden Anwendung wird ein Spektrometer verstanden, welches vom Endnutzer verwendet wird und die gleiche Bauart wie das Primärspektrometer aufweist. Sekundärspektrometer werden oft in großen Stückzahlen hergestellt, so dass eine individuelle Kalibration jedes einzelnen Sekundärspektrometers sehr zeit- und kostenaufwändig ist. Oft liegt auf dem Sekundärspektrometer bereits eine erste Wellenlängenzuordnung vor, welche mittels einer werksseitigen individuellen Erstkalibration oder bei Bauartgleichheit von Primär- und Sekundärspektrometer durch Übertragung der Wellenlängenzuordnung des Primärspektrometers auf das Sekundärspektrometer erfolgen kann. Sind Sekundär - und Primärspektrometer sehr unterschiedlich, kann eine erste Wellenlängenzuordnung des Sekundärspektrometers auch mittels bekannter Kalibrationsverfahren, insbesondere Peaksucheverfahren, ermittelt werden. Hierbei kann insbesondere zunächst eine erste Wellenlängenkalibration nach dem Peaksucheverfahren durchgeführt werden, um die Lage der Messwertblöcke ungefähr bestimmen zu können, bevor hierauf basierend eine exaktere Wellenlängenkalibrierung mit den erfindungsgemäßen Verfahren durchgeführt wird.

Prinzipiell können Primärspektrometer und Sekundärspektrometer auch dasselbe Gerät darstellen. In diesem Fall wird beispielsweise ein Spektrometer einmalig werksseitig mittels eines konventionellen Wellenlängenkalibrationsverfahrens kalibriert und ein eigenes Modellspektrum aufgenommen (entspricht Primärspektrometer). Nachfolgend nach Auslieferung an den Kunden wird das Spektrometer mittels der erfindungsgemäßen Verfahren anwenderseitig kalibriert (entspricht Sekundärspektrometer). Auch solche Ausführungsformen sind von der vorliegenden Erfindung umfasst.

Unter Modellspektrum im Sinne der vorliegenden Anwendung wird ein Intensitätsspektrum einer Lichtquelle verstanden, welches als Referenzspektrum mit dem Primärspektrometer bestimmt wurde. Als Spektrum wird allgemein die Intensität einer elektromagnetischen Strahlung als Funktion der Wellenlänge, der Frequenz oder der Energie verstanden, wobei Wellenlänge, Energie und Frequenz äquivalente Größen sind. Insbesondere bei spektrometrischen Verfahren, welche mit Detektorarrays arbeiten, ist auch eine Darstellung der Intensität als Funktion der Pixelnummer des Detektorarrays möglich, auf welches das Spektrum abgebildet wird, da nach entsprechender Wellenlängenkalibration eine eindeutige Beziehung zwischen Pixelnummer und darauf abgebildetem Spektralbereich besteht. Als Intensitätsspektrum einer Lichtquelle wird hierbei nicht nur das direkte Emissionsspektrum einer Lichtquelle verstanden. Als Intensitätsspektren von Lichtquellen im Sinne der vorliegenden Anmeldung können auch Emissionsspektren von Lichtquellen angesehen werden, welche zwischen Emissionsort in der Lichtquelle und der Detektionseinheit in ihren spektralen Eigenschaften modifiziert werden. So können beispielsweise optische Filterelemente eingebracht werden, um bestimmte Spektralbereiche selektiv durchzulassen oder auszublenden. Weiterhin können beispielsweise bestimmte Farbstoffe oder optisch absorbierende und/oder streuende Medien in den Strahlengang eingebracht werden, welche zusätzliche Modifikationen des Spektrums bewirken, die beispielsweise in Form zusätzlicher Maxima oder Minima gezielt zu Kalibrations- oder Kontrollzwecken genutzt werden können. Solche Medien können beispielsweise spezielle Kalibrations- oder Qualitätskontrollflüssigkeiten sein. Weiterhin können auch spezielle Farbstoffe in den Strahlengang eingeführt werden, welche beispielsweise mittels Fluoreszenz und/oder Lumineszenz den Spektralbereich des an der Detektionseinheit eintreffenden Licht vergrößern können. Das primär aufgenommene Modellspektrum weist detektorbedingt nur eine begrenzte Anzahl von Messwerten (= realen Pixeln) auf und kann daher zum Erhalt von Zwischenwerten mit einer geeigneten Methode interpoliert werden, um zusätzliche virtuelle Messwerte zu erhalten. Mit solchen Methoden kann die Genauigkeit einer Wellenlängenkalibration deutlich erhöht werden.

Unter Kalibrationsspektrum im Sinne der vorliegenden Anwendung wird ein Intensitätsspektrum einer Lichtquelle verstanden, welches mit einem Sekundärspektrometer bestimmt wurde und als Ausgangspunkt für eine Wellenlängenkalibration des Sekundärspektrometers dient. Bei der Bestimmung eines Kalibrationsspektrums auf einem Sekundärspektrometer sollte die hierzu eingesetzte Lichtquelle und Detektionseinheit des Sekundärspektrometers eine vergleichbare Bauart zu der zur Bestimmung des Modellspektrums verwendeten Lichtquelle und Detektionseinheit aufweisen und die Bestimmung des Kalibrationsspektrums unter vergleichbaren optischen Bedingungen wie die Bestimmung des Modellspektrums erfolgen.

Unter Messwertblock im Sinne der vorliegenden Anmeldung wird ein Ausschnitt mehrerer nebeneinander liegender Intensitätswerte (z.B. 32) aus dem Modellspektrum oder dem Kalibrationsspektrum verstanden. Ein Messwertblock enthält eine Positionsmarkierung des Messwertblocks und mindestens zwei Wertepaare, bestehend jeweils aus Pixelnummer und Intensitätswert des Modellspektrums bzw. des Kalibrationsspektrums bei dieser Pixelnummer. Ein Messwertblock entspricht somit einem bestimmten Teilspektrum des Modell- bzw. Kalibrationsspektrums, welcher durch die Positionsmarkierung und die Breite des Spektralbereichs (Zahl der Wertepaare) eindeutig bestimmt ist.

Unter einem Detektorarray im Sinne der vorliegenden Anmeldung wird allgemein eine Anordnung nebeneinander liegender lichtempfindlicher Detektoren bezeichnet. Solche Diodenarraydetektoren oder Fotodiodenarrays bestehen zumeist aus einer Gruppe linear (zeilenförmig) angeordneter Fotodioden sowie zumeist einer integrierten Versorgungs- und Ausleseschaltung. Die Anzahl der Einzeldioden auf dem Chip ist begrenzt. Moderne Bauelemente besitzen typischerweise 128, 256, 512 oder auch 1024 Einzelelemente. Ein solches Einzelelement entspricht hierbei einem Pixel. Ebenso sind Anordnungen von mehreren linearen Detektorzeilen übereinander bekannt (zweidimensionale Arrays), welche bei entsprechender Ansteuerung ebenfalls wie lineare Detektorarrays in Sinne der vorliegenden Anmeldung eingesetzt werden können. Solche ein- oder zweidimensionalen Detektorarrays können beispielsweise CCD-Chips, CMOS-Chips, Photodioden-Arrays, Avalanche-Dioden-Arrays, Multichannel-Plates und Vielkanal-Photomultiplier sein.

Unter einem Pixel im Sinne der vorliegenden Anmeldung wird allgemein die kleinste Einheit verstanden, in welche die x-Achse eines Spektrums unterteilt ist. Bei Verwendung eines Detektorarrays, insbesondere eines linearen Detektorarrays, als Detektionseinheit, entsprechen die Pixel zunächst grundsätzlich den einzelnen nebeneinander liegenden lichtempfindlichen Bauteilen (Photodioden). Bei Spektrometern nach dem Monochromatorprinzip werden keine Detektorarrays als Detektionseinheiten verwendet, sondern ein entsprechend empfindlicher Einzeldetektor (z.B. eine Fotodiode, ein Halbleiterdetektoren oder ein Fotomultiplier). Bei Spektrometern nach dem Monochromatorprinzip bildet ein Abbildungssystem die Lichtquelle auf einen Spalt ab, wobei ein Monochromator zur Auswahl der hindurch tretenden Wellenlänge verwendet wird. Dieser wird beispielsweise durch einen Schrittmotor angetrieben und strahlt jeweils die in Beziehung zur Position des Monochromators stehenden Wellenlänge in den Spalt ein. Mit einem weiteren Abbildungssystem wird die Strahlung vom Monochromatorspalt auf die Probe fokussiert und nach Interaktion mit der Probe auf die Detektionseinheit abgebildet. Grundsätzlich kann die Reihenfolge auch umgekehrt sein, d.h. dass der Weg des Lichtes der Lichtquelle zuerst durch die Probe und erst dann durch den Monochromator und weiter zur Detektionseinheit verläuft. Typischerweise führt anschließend ein Analysesystem die jeweiligen Werte von jeweiliger eingestrahlter Wellenlänge und dem zugehörigen Detektorsignal zusammen und stellt sie in Form eines Spektrums dar. Die erfindungsgemäßen Verfahren sind grundsätzlich auch für die Verwendung mit Spektren geeignet, welche mittels eines solchen Monochromatorspektrometers erhalten wurden. Als Pixel werden hierbei die Wellenlängen oder Wellenlängenbereiche angesehen, welche gleichzeitig auf der Detektionseinheit abgebildet werden. Diese Größen hängen einerseits von der Breite des Monochromatorspalts und andererseits auch von der Art und Weise der Ansteuerung des zur spektralen Auftrennung eingesetzten optischen Elements (z.B. Prisma oder Beugungsgitter) ab. Wird beispielsweise ein Schrittmotor zur Ansteuerung des zur spektralen Auftrennung eingesetzten optischen Elements eingesetzt, kann der jeweilige am Monochromatorspalt anliegende Spektralbereich beispielsweise durch die jeweilige Position des Schrittmotors bestimmt werden. Erfolgt die Ansteuerung des zur spektralen Auftrennung eingesetzten optischen Elements beispielsweise in einer kontinuierlichen Bewegung, können die am Monochromatorspalt anliegenden Spektralbereiche beispielsweise durch ihre Korrelation mit bestimmten Zeitintervallen nach Beginn der Bewegung des zur spektralen Auftrennung eingesetzten optischen Elements definiert werden.

Neben den x realen Pixelwerten, welche beispielsweise den x Einzelelementen des Detektorarrays (z.B. 128, 256, 512 oder 1024) entsprechen, können durch Interpolationsverfahren weitere Zwischenwerte erhalten werden, welche in definierten Abständen zwischen der realen Pixeln als virtuelle Pixel liegen. So kann beispielsweise durch Interpolation von jeweils 9 bzw. 99 virtuellen Zwischenwerten zwischen zwei realen Pixeln die Pixelzahl eines Spektrums, welches mit einem Detektorarray aus 512 Einzeldioden gewonnen wurde, auf die rechnerische Pixelzahl auf 5111 bzw. 51101 Pixel erhöht werden. Solche Interpolationsverfahren zur Erhöhung der Pixelzahl begünstigen die Genauigkeit der erfindungsgemäßen Verfahren zur Wellenlängenkalibration. Als Pixel im Sinne der vorliegenden Anmeldung können sowohl die realen gemessenen Pixel als auch die virtuellen, durch Interpolation erhaltenen Pixel eingesetzt werden.

Unter einer Positionsmarkierung eines Messwertblocks im Sinne der vorliegenden Anmeldung wird ein Wert verstanden, welcher die Position eines Messwertblocks auf der x-Achse eines Spektrums eindeutig definiert. Eine solche Positionsmarkierung kann dabei als Wellenlänge, Frequenz bzw. Energie der Strahlung oder auch als Pixelnummer angegeben werden. Als Positionsmarkierung kann beispielsweise die jeweils erste Pixelnummer oder die jeweils letzte Pixelnummer oder die Pixelnummer der Mitte des Messwertblocks verwendet werden.

Unter einem zu einem Messwertblock des Modellspektrums korrespondierenden Messwertblock des Kalibrationsspektrums im Sinne der vorliegenden Anmeldung wird der Bereich des Kalibrationsspektrums verstanden, welcher aufgrund seiner Lage (Positionsmarkierung) und vorzugsweise auch seiner Größe einem im Speicher des Sekundärspektrometers vorliegenden Messwertblock des Modellspektrums entspricht. Hierzu wird zunächst die bekannte Positionsmarkierung des Messwertblocks des Modellspektrums auf das Kalibrationsspektrum übertragen und ausgehend von dieser Lagedefinition ein Messwertblock aus dem Kalibrationsspektrum ausgeschnitten, welcher in seiner relativen Lage zur Positionsmarkierung und vorzugsweise auch in seinem Datenumfang (Zahl der Wertepaare) im wesentlichen identisch mit dem Messwertblock des Modellspektrums ist. Wird beispielsweise ein im Speicher des Sekundärspektrometers vorliegender Messwertblock durch die Positionsmarkierung Pixel 104 und den Datenumfang (Positionsmarkierung + 9 nachfolgende Pixel) bestimmt, d.h. er umfasst die Positionsmarkierung 104 und 10 Wertepaare aus jeweils Pixelnummer und zugeordnetem Intensitätswert, so kann der korrespondierende Messwertblock des Kalibrationsspektrums dadurch bestimmt werden, dass aus diesem Spektrum ein Messwertblock ausgeschnitten wird, welcher ebenfalls bei Pixelnummer 104 beginnt und dieses sowie die 9 nachfolgenden Wertepaare, d.h. die Wertepaare der Pixelnummern 104-113, umfasst. Gerätebedingte individuelle Unterschiede zwischen Primär- und Sekundärspektrometer können hierbei bereits berücksichtigt werden. So kann es beispielsweise bei größeren gerätespezifischen Unterschieden zwischen Spektrometern vorkommen, dass auf dem Sekundärspektrometer mittels eines Peaksucheverfahrens eine erste Wellenlängenzuordnung beim Sekundärspektrometer vorliegt, welche beispielsweise um 1 Pixel zum Primärspektrometer verschoben ist. In solchen Fällen ist es beispielsweise auch möglich, dass die Messwertblöcke des Kalibrationsspektrums und Modellspektrums um 1 Pixel versetzt zueinander ausgeschnitten werden und diese Verschiebung bei der genauen Wellenlängenkalibration nach dem erfindungsgemäßen Verfahren mit berücksichtigt wird.

Unter schrittweiser Relativ-Verschiebung der Messwertblöcke im Sinne der vorliegenden Erfindung wird ein Verfahren verstanden, bei welchem die beiden Messwertblöcke wiederholt um einen definierten Anstand relativ gegeneinander verschoben werden. Praktisch geschieht dies beispielsweise dadurch, dass anstelle des direkt korrespondierenden Messwertblocks des Kalibrationsspektrums, welcher durch die gleiche Positionsmarkierung wie der entsprechende Messwertblock des Modellspektrums gekennzeichnet ist, ein Messwertblock des Kalibrationsspektrums verwendet wird, welcher eine um einen ein- oder auch vielfachen Pixelabstand verschobene Lage der Positionsmarkierung aufweist. Die Verschiebung kann dabei ausgehend von der ursprünglichen Lage der Positionsmarkierung sowohl zu niedrigeren als auch höheren Pixelnummern erfolgen. Durch ein wiederholtes Durchführen dieser Verschiebungsschritte können so über einen gewissen Bereich alle möglichen RelativVerschiebungen der Messwertblöcke erfasst werden. So können beispielsweise zu einem Messwertblock des Modellspektrums mit Positionsmarkierung 104 und 5 Wertepaaren (z.B dargestellt durch P104: (104/I(104), 105/I(105), 106/I(106), 107/I(107), 108/I(108)) durch schrittweise Relativverschiebung der Messwertblöcke um je 2 Pixel nach links und rechts nacheinander die relativ verschobenen Messwertblöcke P102: (102/I(102), 103/I(103), 104/I(104), 105/I(105), 106/I(106), P103: (103/I(103), 104/I(104), 105/I(105), 106/I(106), 107/I(107), P104: (104/I(104), 105/I(105), 106/I(106), 107/I(107), 108/I(108), P105: (105/I(105), 106/I(106), 107/I(107), 108/I(108), 109/I(109) und P106: (106/I(106), 107/I(107), 108/I(108), 109/I(109), 110/I(110) des Kalibrationsspektrums erhalten werden.

Unter Korrelationswert im Sinne der vorliegenden Anmeldung wird ein Wert verstanden, welcher als Maß für die Übereinstimmung der Intensitätswerte der jeweils betrachteten Messwertblöcke von Modellspektrum und Kalibrationsspektrum dient. Zur Quantifizierung der Übereinstimmung oder Korrelation können vor allem Korrelationskoeffizienten, prinzipiell aber auch andere Verfahren wie Transinformation und die Kullback-Leibler-Divergenz oder auch nicht-parametrische Testverfahren, z. B. die Spearman-Rangkorrelationskoeffizient oder die Kendall-Rangkorrelation, verwendet werden. Der in der Praxis am häufigsten verwendete Korrelationskoeffizient ist der Korrelationskoeffizient nach Pearson, welcher ein dimensionsloses Maß für den Grad des linearen Zusammenhangs zwischen zwei mindestens intervallskalierten Wertepaarblöcken ist. Er kann Werte zwischen -1 und 1 annehmen, wobei bei einem Wert von +1 (bzw. -1) ein vollständig positiver (bzw. negativer) linearer Zusammenhang zwischen den betrachteten Messwertblöcken besteht. Wenn der Korrelationskoeffizient den Wert 0 aufweist, hängen die beiden Messwertblöcke überhaupt nicht linear voneinander ab. Ein mathematisches Verfahren, die so genannte Kreuzkorrelation, beinhaltet zwei Funktionen: das automatische Verschieben den Messwertblöcke zueinander und die gleichzeitige Berechnung der Korrelationswerte. Deshalb ist die Anwendung der Kreuzkorrelation in den erfindungsgemäßen Verfahren besonders vorteilhaft.

Unter Verschiebungswert im Sinne der vorliegenden Anmeldung wird ein Wert verstanden, welcher angibt, bei welcher Relativverschiebung der korrespondierenden Messwertblöcke des Modellspektrums und Kalibrationsspektrums die beste Übereinstimmung der Intensitätswerte vorliegt, d.h. bei welcher Relativverschiebung der korrespondierenden Messwertblöcke ein Optimum des Korrelationswertes vorliegt. Das Optimum des Korrelationswertes kann je nach Art der Korrelation und Wahl der quantitativen Bestimmung des Korrelationswertes ein Maximum oder Minimum sein. Der Verschiebungswert kann hierbei sowohl in Form eines Differenzwertes (optimale Korrelation der Messwertblöcke bei Verschiebung um Δx Pixel nach rechts bzw. links: Verschiebungswert = + Δx bzw. - Δx) oder Absolutwertes (optimale Korrelation der Messwertblocks mit der Positionsmarkierung x bei Verschiebung um Δx Pixel nach rechts bzw. links: Verschiebungswert = x+Δx bzw. x-Δx). Beispielsweise im Falle einer optimalen Korrelation bei Verschiebung des Messwertblocks des Kalibrationsspektrums um 2 Pixel nach rechts relativ zum korrespondierenden Messwertblock des Modellspektrums, welcher die Positionsmarkierung Pixel 32 aufweist, kann der Verschiebungswert in Form des Differenzwertes +2 oder des Absolutwertes 34 (= Positionsmarkierung Pixel 32 + Relativverschiebung von +2 Pixel) angegeben werden.

Ein Wertepaar bestehend aus Positionsmarkierung des Messwertsblocks des Modellspektrums und dem so bestimmten Verschiebungswert ordnet so jeden betrachteten Messwertblock des Modellspektrums einen Verschiebungswert zu, durch welchen die Relativverschiebung der beiden Messwertblöcke bestimmt ist, bei welche die beste Korrelation der Messwertblöcke vorliegt. Ein solches Wertepaar würde beispielsweise gemäß vorherigem Beispiel die Werte (32/+2) (bei Verwendung des Differenzwertes als Verschiebungswert) bzw. (32/34) (bei Verwendung des Absolutwertes als Verschiebungswert) annehmen.

Unter Fitting werden im Sinne der vorliegenden Anmeldung allgemein mathematische Optimierungsmethoden verstanden, um für eine Reihe von Wertepaaren die am besten dazupassenden Parameter oder Koeffizienten einer vorgegebenen Zuordnungsfunktion zu bestimmen. Der Begriff umfasst allgemein alle mathematischen Verfahren der Ausgleichungsrechnung. Ziel einer solchen Ausgleichsrechnung ist, dass sich die Funktion den Daten bestmöglich anpasst. Häufig wird hierbei ein Fitting nach der Methode der kleinsten Quadrate (alternativ nach einer anderen Fehlerbewertungsfunktion, z. B. Minimierung der Absolutfehler) eingesetzt. Hierbei werden die Koeffizienten der Funktion so bestimmt, dass die Quadratsumme der Abweichungen aller Wertepaare minimal wird und damit Werte und Funktion bestmöglich übereinstimmen. Wird beispielsweise als Fittingfunktion eine Polynomfunktion 3 Grades in Form der Gleichung y = a₀ + a₁ x + a₂ x² + a₃ x³ ausgewählt, werden durch diese Optimierungsmethoden die Koeffizienten a₀, a₁, a₂ und a₃ so bestimmt, dass die Kurve dieser Funktion sich bestmöglich an die Wertepaare anschmiegt.

Im Folgenden wird nun die Durchführung einzelner Schritte der erfindungsgemäßen Verfahren näher erläutert, wobei auch weitere optionale, alternative und/oder vorteilhafte Verfahrensschritte genannt werden.

Geeignete Lichtquellen zur Erstellung des Modell- und/oder Kalibrationsspektrums sind prinzipiell alle Lichtquellen, welche über einen möglichst großen Spektralbereich einen stark differenzierten Verlauf und zudem geringe spektrale Veränderungen über die Zeit aufweisen. Als besonders geeignete Lichtquellen zur Durchführung des erfindungsgemäßen Verfahren können Spektrallampen, insbesondere Neon-, Argon- oder Quecksilber-Spektrallampen, Kombinationen breitbandiger Lichtquellen, insbesondere einer Halogenlichtquelle, mit Filtern, insbesondere Seltenerdmetall-Filtern, oder Kombinationen mehrerer wellenlängenstabilisierter Laser oder LEDs verwendet werden. Seltenerdmetall-Filter sind optische Glasfilter, welche mit zur Gruppe der Seltenerdmetalle gehörenden chemischen Elementen bzw. deren Verbindung (z.B. Holmiumoxid oder Didymium (Mischung aus Neodym und Praseodym) versetzt werden. Diese optischen Filter besitzen hierdurch eine spezifische Filtercharakteristik (Bandpasseigenschaften) und zeichnen sich durch Temperaturunabhängigkeit und optische Langzeitstabilität aus.

Das erfindungsgemäß eingesetzte Modellspektrum kann vorzugsweise durch Mitteln mehrerer Intensitätsspektren, welche mit mehreren Lichtquellen gleicher Bauart, mehreren Detektionseinheiten gleicher Bauart oder mit mehreren Spektrometern gleicher Bauart gemessen wurden, gewonnen werden. Dies ist insbesondere dann vorteilhaft, wenn ein und dasselbe Modellspektrum für die Wellenlängenkalibration vieler Sekundärspektrometer gleicher Bauart herangezogen wird, da hierdurch individuelle Differenzen einzelner Spektren, welche als Referenzspektren bestimmt wurden, ausgeglichen werden, so dass hierdurch ein robusteres Modellspektrum erhalten werden kann. So können insbesondere individuelle Unterschiede der Lichtquellen, der Detektionseinheiten und/oder des gesamten optischen Systems der Spektrometer bei der Ermittlung eines Modellspektrums berücksichtigt werden.

In einer bevorzugten Ausführungsform der Erfindung erfolgt die Bestimmung des Kalibrationsspektrums auf dem Sekundärspektrometer bei möglichst gleichen Integrationszeiten, möglichst gleichen Messungswiederholungszahlen und/oder möglichst gleichen optischen Bedingungen wie die Bestimmung des Modellspektrums auf dem Primärspektrometer. Hierdurch wird das Kalibrationsspektrum unter möglichst gleichen Randbedingungen wie das als Referenz dienende Modellspektrum ermittelt, so dass die Spektren sich nicht zusätzlich aufgrund unterschiedlicher Messbedingungen unterscheiden sollten. Hierdurch kann eine möglichst exakte Wellenlängenkalibration erzielt werden.

Die Zahl der Wertepaare und somit die Größe der einzelnen Messwertblöcke des Modellspektrums, welche im Speicher des Sekundärspektrometers vorliegen, kann unterschiedlich sein. So können beispielsweise in Spektralbereichen, welche einen differenzierten Intensitätsverlauf, beispielsweise einen klar ausgeprägten Peak, aufweisen, Messwertblöcke relativ geringer Größe eingesetzt werden, während in Spektralbereichen, welche einen weniger differenzierten Intensitätsverlauf, beispielsweise sanft ansteigende spektrale Schultern, aufweisen, vorzugsweise Messwertblöcke größerer Größe eingesetzt werden. Die einzelnen Messwertblöcke des Modellspektrums können auch teilweise überlappen oder ein kleinerer Messwertblock kann gänzlich innerhalb eines größeren Messwertblocks liegen. Die Minimalzahl der Wertepaare eines Messwertblocks beträgt 2 Wertepaare, die Maximalzahl der Wertepaare ist durch die Auflösung des Spektrometers bzw. dessen Detektionseinheit bestimmt, wobei jedoch durch Interpolationsverfahren noch Zwischenwerte ermittelt werden können, wodurch die Zahl der Wertepaare erhöht werden kann. Weiterhin kann auch die Zahl der Wertepaare korrespondierender Messwertblocks von Kalibrationsspektrum und Modellspektrum aufgrund unterschiedlich interpolierter virtueller Zwischenwertepaare unterschiedlich sein. So kann insbesondere der Messwertblock des Modellspektrums zu Erhöhung der Kalibrationsgenauigkeit interpolierte Zwischenwertepaare beinhalten, während der korrespondierende Messwertblock des Kalibrationsspektrums lediglich aus den realen Wertepaaren besteht. Weiterhin können die Messwertblöcke zur Durchführung von bestimmten Korrelationsverfahren an deren Rändern um eine bestimmte Anzahl von Wertepaaren gekürzt werden.

Die Auswahl der Messwertblöcke erfolgt vorzugsweise an den Spektralverlauf des Modellspektrums angepasst. Aus diesem Gesamtspektrum würde ein Fachmann bevorzugt diejenigen Bereiche als Messwertblöcke auswählen, welche in diesem Teilbereich des Spektrums einen ausreichend differenzierten Verlauf aufweisen. Vorteilhafterweise sind dies Bereiche des Modellspektrums, welche hohe Intensitätsunterschiede oder geringes Rauschen oder wenig Streulicht aufweisen.

Beispiele für geeignete Messwertblöcke sind Spektralbereiche, welche einen oder mehrere Peaks, eine oder mehrere Absorptionslücken, spezifische Absorptions- oder Emissionslinien oder charakteristische Intensitätsverläufe (Schultern, Knicke, Sprünge...) aufweisen.

In einer Ausführungsform des erfindungsgemäßen Verfahrens sind die Messwertblöcke des Modellspektrums direkt im Speicher des Sekundärspektrometers hinterlegt und liegen dort für jeden Messwertblock in Form einer Positionsmarkierung des Messwertblocks und jeweils mindestens zwei Wertepaaren vor. Diese Art der Messwertblockshinterlegung kann vorzugsweise dann eingesetzt werden, wenn relativ wenige und nicht überlappende Messwertblöcke vorliegen.

In einer alternativen Ausführungsform des erfindungsgemäßen Verfahrens sind die einzelnen Messwertblöcke des Modellspektrums nicht selbst im Speicher des Sekundärspektrometers hinterlegt, sondern stattdessen das gesamte Modellspektrum oder zumindest die Teile des Modellspektrums, aus welchen Messwertblöcke ausgeschnitten werden können. Zusätzlich zu diesen Spektralbereichen müssen Informationen über die einzelnen Messwertblöcke im Speicher des Sekundärspektrometers vorhanden sein. Diese Informationen müssen zumindest die Lage (z.B. Positionsmarkierung des Messwertblocks) und Größe (Zahl der Wertepaare und deren Lage relativ zur Positionsmarkierung) der jeweiligen Messwertblöcke beinhalten. Mittels dieser Informationen können die jeweiligen Messwertblöcke erst vor oder während der Durchführung des erfindungsgemäßen Verfahrens im Sekundärspektrometer aus dem dort hinterlegten Modellspektrum ermittelt werden. Diese Art der Messwertblocksermittlung kann vorzugsweise dann eingesetzt werden, wenn viele überlappende Messwertblöcke vorliegen, da diese dann nicht einzeln abgespeichert werden müssen, wodurch eine Einsparung an Speicherplatz resultiert. Weiterhin können mit dieser Methode auch im Laufe des Betriebs auf einfache Weise andere oder zusätzliche Messwertblöcke benutzt werden. Hierfür reicht in dieser Ausführungsform eine Hinterlegung von Lage und Größe der neuen Messwertblöcke auf dem Sekundärspektrometer aus, ohne dass neue umfangreiche Spektraldaten aufgespielt werden müssen.

In einer bevorzugten Ausführungsform der erfindungsgemäßen Verfahren bestehen die Wertepaare der Messwertblöcke des Modellspektrums neben den realen Wertepaaren, welche direkt bei der Bestimmung des Modellspektrums auf dem Primärspektrometer ermittelt wurden, auch aus zusätzlichen virtuellen Wertepaaren in Form interpolierter Pixelwerte und Intensitätswerte. Diese liegen ebenfalls im Speicher des Sekundärspektrometers vor und werden bei der Durchführung des Verfahrens berücksichtigt. Da das am Primärspektrometer aufgenommene Modellspektrum detektorbedingt nur eine begrenzte Anzahl von Messwerten (d.h. realen Pixeln) aufweist, kann durch solche zusätzlichen virtuellen Wertepaare die Größe eines Messwertblocks erhöht werden, was aufgrund der eingesetzten statistischen Methoden die Genauigkeit einer Wellenlängenkalibration deutlich erhöhen kann.

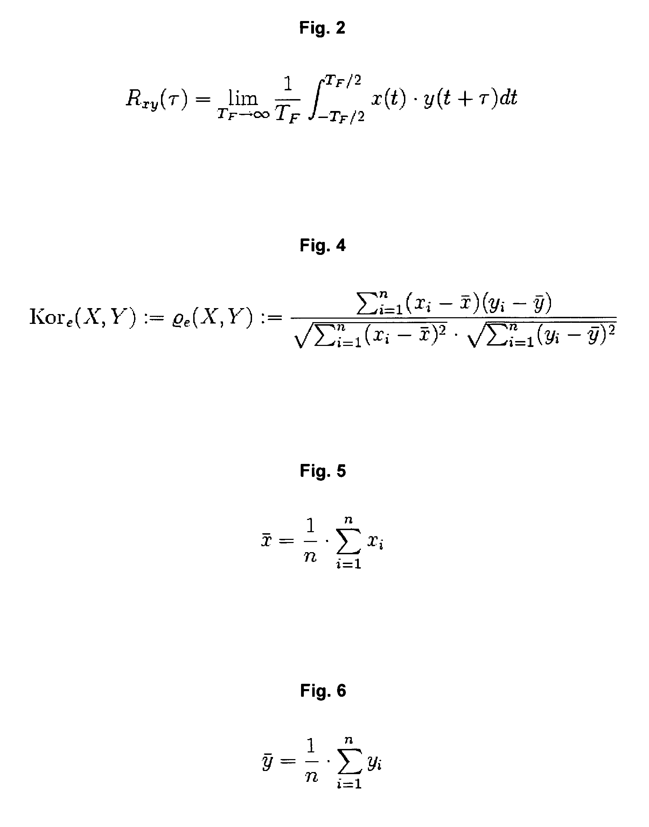

In einer bevorzugten Ausführungsform der erfindungsgemäßen Verfahren wird zur Bestimmung eines Korrelationswertes zwischen den relativ zueinander verschobenen, korrespondierenden Messwertblöcken des Modellspektrums und Kalibrationsspektrums das Verfahren der Kreuzkorrelationsanalyse eingesetzt. in einer besonders bevorzugten Ausführungsform wird ein Kreuzkorrelationsverfahren mit Mittelwertkorrektur und Normierung eingesetzt. Eine Kreuzkorrelationsfunktion beschreibt die Korrelation zweier zueinander verschobener Funktionen, wobei jedem so erhaltenen Korrelationswert eine bestimmte Relativverschiebung der Spektren zueinander zuzuordnen ist. In der Signalanalyse wird eine Kreuzkorrelationsfunktion gemäß Figur 2 zur Beschreibung der Korrelation zweier Signale bei unterschiedlichen Zeitverschiebungen τ zwischen den beiden Signalen eingesetzt. Erfindungsgemäß kann eine analoge Kreuzkorrelationsfunktion zur Ermittlung der Wellenlängenverschiebungen zwischen den korrespondierenden Messwertblöcken von Modell- und Kalibrationsspektren eingesetzt werden.

### Beispiel 1:

Beispiel 1 beschreibt eine konkrete Ausführungsform eines erfindungsgemäßen Verfahrens analog der dritten bevorzugten Ausführungsform.

Eine Wellenlängenkalibration nach der erfindungsgemäßen Methode wird an einem Gitterspektrometer mit der Bezeichnung CP20 von der Firma Jobin Yvon (Longjumeau Cedex, Frankreich) durchgeführt. Dieses Spektrometer besitzt einen linearen Zeilensensor mit 256 Pixeln, kann einen Wellenlängenbereich von 638 bis 1038 nm auflösen und hat eine spektrale Bandbreite von ca. 8 nm.

Ein erstes CP20-Spektrometer wird zum Primärspektrometer definiert, ein weiteres bauartgleiches CP20-Spektrometer zum Sekundärspektrometer. Für beide Spektrometer liegt eine erste Wellenlängenzuordnung vor, welche werksseitig vom Hersteller mittels eines konventionellen Peaksucheverfahrens durchgeführt wurde und den Spektrometern beiliegt. Im konkreten Fall ist die Wellenlängenzuordnung ein Polynom 3. Grades (λ = a₀ + a₁ x + a₂x² + a₃x³) und für jedes Spektrometer wurden die vier Koeffizienten a₀, a₁, a₂ und a₃ zur Wellenlängenzuordnung mitgeliefert.

Das Primärspektrometer wird mittels eines Lichtleiters an ein Lampengehäuse, in der sich eine Neonlampe befindet, angeschlossen. Eine Messung des Intensitätsspektrums wird mit zwei unterschiedlichen Integrationszeiten durchgeführt, da die Peaks im langwelligeren Bereich des Spektrums kleine Intensitäten besitzen. So werden die Intensitätswerte der Pixel 1 bis 75 mit kurzen Integrationszeiten von 330 ms, die Intensitätswerte der Pixel 76 bis 256 mit langen Integrationszeiten von 8000 ms bestimmt. Mit dem gleichen Aufbau und unter möglichst gleichen Bedingungen erfolgt die Messung des Kalibrationsspektrums mit dem Sekundärspektrometer.

Zum Erhalt des Modellspektrums werden die mit dem Primärspektrometer bestimmten realen Wertepaare des aufgenommenen Spektrums interpoliert. Dafür wird eine Methode unter Verwendung von Splines gewählt. Die Interpolation dient zur Berechnung zusätzlicher virtueller Wertepaare. Es werden jeweils 99 Zwischenwertepaare zwischen 2 Pixel berechnet. So wird aus der ursprünglichen Messung mit 256 Wertepaaren ein Modellspektrum mit 25501 Wertepaaren.

Figur 3 zeigt zwei derart ermittelte Spektren. Auf der x-Achse ist die jeweilige Pixelnummer aufgetragen, auf der y-Achse die auf den Maximalwert normierte Intensität I (in relativen Einheiten). Das mit einer durchzogenen Linie dargestellte Spektrum stellt das mit dem Primärspektrometer erhaltene Modellspektrum dar, das mit einer strichlierten Linie dargestellte Spektrum stellt das mit dem Sekundärspektrometer erhaltene Kalibrationsspektrum dar. Insbesondere in den Bereichen um die Pixelnummern 5-12 und 35- 50 zeigen sich trotz bauartgleicher Spektrometer Verschiebungen in der Wellenlängenzuordnung.
Wie anhand Figur 3 ersichtlich, besitzen die Kurven in bestimmten Spektralbereichen einen relativ undifferenzierten Intensitätsverlauf. So weisen sie in den Bereichen der Pixelnummern 68 - 74 und 144 - 250 nur geringe Intensitätsunterschiede in Form weniger und sehr kleiner Peaks auf. Daher werden zur Bestimmung von Messwertblöcken die Bereiche der Pixelnummern 1 - 67 und Pixelnummern 75 - 143 verwendet, da diese einen für das erfindungsgemäße Verfahren ausreichend differenzierten Intensitätsverlauf aufweisen. Aus dem Modellspektrum werden insgesamt 30 Messwertblöcke aus je 32 Pixelnummern (plus zusätzlich der interpolierten Zwischenwertepaare), die sich um jeweils 30 Pixelnummern überlappen, ausgewählt. Jedem Messwertblock wird eine Pixelnummer als Positionsmarkierung zugeordnet, welcher der Pixelnummer des in der Mitte des jeweiligen Messwertblocks befindlichen Pixels entspricht. Nachfolgend werden die korrespondierenden Messwertblöcke aus dem Kalibrationsspektrum und dem Modellspektrum ausgeschnitten, wobei die Messwertblöcke vom Kalibrationsspektrum zusätzlich links und rechts um jeweils 2 Pixelnummern gekürzt werden. Dadurch kann eine Wellenlängenverschiebung von maximal +2 bis -2 Pixel berechnet werden. Jeder aus dem Kalibrationsspektrum herausgeschnittene Messwertblock besteht somit aus 28 Wertepaaren und jeder aus dem Modellspektrum herausgeschnittene Messwertblock besteht aus 32 Wertepaaren plus aller interpolierten Zwischenwertepaare, d.h. aus 3101 Wertepaaren.

Zur Bestimmung der Wellenlängenverschiebung zwischen den Messwertblöcken des Modellspektrums und des Kalibrationsspektrums wird eine Kreuzkorrelation mit Mittelwertkorrektur und Normierung durchgeführt. Hierbei wird ein Messwertblock des Kalibrationsspektrums schrittweise über den entsprechenden Messwertblock des Modellspektrums geschoben. Jeder Verschiebungsschritt ist so groß wie die (virtuelle) Auflösung des Modellspektrums, also ein Hundertstel des realen Pixelabstands. Bei jedem Schritt wird ein empirischer Korrelationskoeffizient (Korₑ) nach Pearson berechnet. Es werden dabei jeweils alle 28 Wertepaare des Kalibrationsspektrums, aber auch nur 28 Wertepaare des Modellspektrums verwendet. Dafür wird beim entsprechenden Messwertblock des Modellspektrums immer nur jedes Hundertste Wertepaar genommen, d.h. bei der ersten Berechnung des Korrelationswertes werden die Wertepaare an den Stellen 1, 101,...bis 2701 und bei der ersten daran anschließenden Verschiebung die Wertepaare an den Stellen 2, 102 ... bis 2702 des Messwertblocks des Modellspektrums verwendet. Bei der letzten Verschiebung werden die Wertepaare an den Stellen 401, 501 ...- 3101 des Messwertblocks des Modellspektrums verwendet. Hieraus resultieren 401 Verschiebungsschritte und somit ebenso viele Korrelationswerte. Die Korrelationswerte selbst werden nach Gleichung gemäß Figur 4 berechnet. Für x gilt die Gleichung gemäß Figur 5, für *y̅* die Gleichung gemäß Figur 6, wobei die Messreihe x₁, x₂, ..., xₙ den Werten eines Blocks des Modellspektrums und die Messreihe y₁, y₂, ..., yₙ den Werten des entsprechenden Blocks des Kalibrationsspektrums entspricht.

Ein hoher Korrelationskoeffizient Korₑ entspricht einer hohen Übereinstimmung von zwei Blöcken, so dass in diesem Fall das Optimum der Korrelationswerte dem maximalen Korrelationskoeffizienten entspricht. Zur erfindungsgemäßen Bestimmung des Verschiebungswertes wird zunächst der relativ verschobene Messwertblock des Kalibrationsspektrums ermittelt, bei welcher dieser maximale Korrelationskoeffizient auftritt. Der Verschiebungswert wird nun als Abstand zwischen der Positionsmarkierung des Messwertsblocks des Modellspektrums und der korrespondierenden Positionsmarkierung des Kalibrationsspektrums, bei welchem dieser maximale Korrelationskoeffizient auftritt, ermittelt. Die Verschiebungswerte können aufgrund der Interpolation der Messwertblöcke des Modellspektrums durch 99 interpolierte Zwischenwerte, welche ebenfalls berücksichtigt werden, Hundertstel Pixelnummern sein.
Für jeden der 30 Messwertblöcke des Modellspektrums wird ein Wertepaar, bestehend aus der Positionsmarkierung des Messwertblocks des Modellspektrums und dem jeweils nach obigem Kreuzkorrelationsverfahren bestimmten Verschiebungswert ermittelt.

Diese 30 Wertepaare dienen als Stützpunkte für ein Fitting nach der Methode der kleinsten Fehlerquadrate an ein Polynom 3. Grades, mittels dessen die Korrekturkoeffizienten Δa₀, Δa₁, Δa₂ und Δa₃ berechnet werden.

In einem letzten Verfahrensschritt werden nun die so ermittelten Korrekturkoeffizienten Δa₀, Δa₁, Δa₂ und Δa₃ zu den entsprechenden Koeffizienten a₀, a₁, a₂ und a₃ der ersten Wellenlängenzuordnung addiert, so dass als Ergebnis des erfindungsgemäßen Verfahrens zur Wellenlängenkalibration folgende wellenlängenkalibrierte Wellenlängenzuordnung auf dem Sekundärspektrometer vorliegt: λₖₐₗ(nm) = (a₀ + Δa₀) + (a₁ + Δa₁) x + (a₂ + Δa₂) x² + (a₃ + Δa₃) x³.

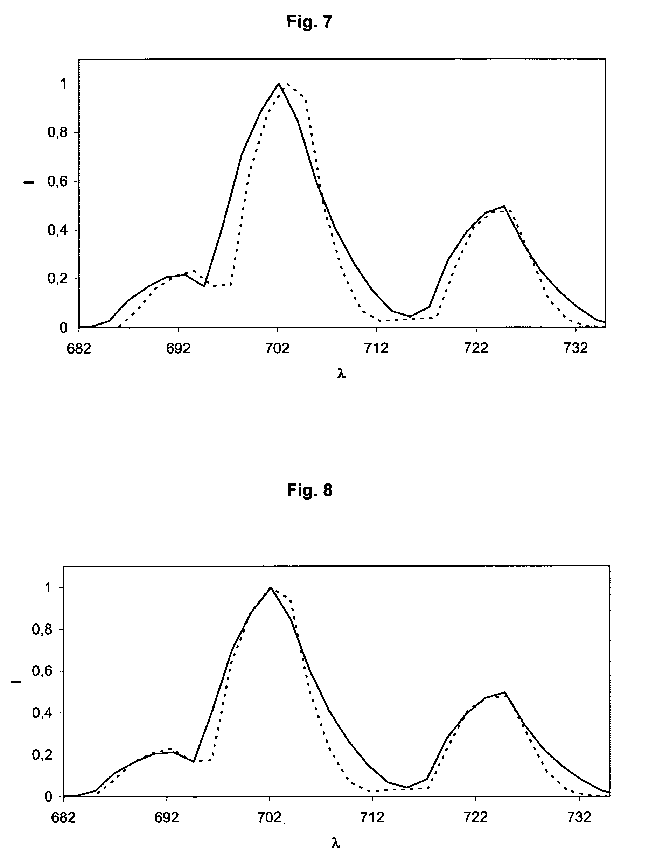

Die Figuren 7 und 8 zeigen im Vergleich korrespondierende Ausschnitte von Neonspektren. In beiden Fällen ist in der mit einer durchgezogenen Linie dargestellten Kurve ein Teil eines mit einem Primärspektrometer aufgenommenen Modellspektrums zu sehen. In Figur 7 stellt die strichliert dargestellte Kurve den korrespondierenden Teil eines Neonspektrums dar, welches mittels eines Sekundärspektrometers bestimmt wurde, welches mit einem konventionellen Peaksucheverfahren wellenlängenkalibriert wurde. In Figur 8 stellt die strichliert dargestellte Kurve den korrespondierenden Teil eines Neonspektrums dar, welches mittels eines Sekundärspektrometers bestimmt wurde, welches mit einem erfindungsgemäßen Verfahren wellenlängenkalibriert wurde. In Figur 7 ist zu erkennen, dass die Kurve des Sekundärspektrometers zur Kurve des Primärspektrometers deutlich nach rechts verschoben ist. Unter Verwendung der erfindungsgemäßen Methode ist in Figur 8 keine derartige Verschiebung der beiden Kurven zu erkennen.

### Beispiel 2:

Zum Aufzeigen und zur Quantifizierung der Vorteile der erfindungsgemäßen Verfahren gegenüber den bisher verwendeten Peaksucheverfahren wird die Wellenlängenkalibration von Spektrometern an einem Spektrum einer Neonlampe in einem Wellenlängenbereich von 655 bis 1035 nm bei verschiedenen rechnerischen Verbreitungen der Bandbreite simuliert. Als Simulationsgrundlage wird ein Neonspektrum mit einem Gitterspektrometer des Typs CP 140 von der Firma Jobin Yvon (Longjumeau Cedex, Frankreich) mit einer spektralen Bandbreite von 2 nm gemessen. Aus diesem Datensatz werden durch eine gleitende Multiplikation mit einer jeweils angepassten Gauss-Kurve simulierte Spektren mit einer jeweiligen Bandbreite von 6, 7.5, 9 und 12 nm berechnet. Bei diesen verschiedenen Spektren werden Wellenlängenkalibrationen jeweils a) mit der Peaksuchemethode und b) mit der erfindungsgemäßen Methode durchgeführt und die jeweiligen maximalen Fehler über den gesamten Wellenlängenbereich berechnet. Diese Fehler sind in der Tabelle 1 aufgeführt. Die Fehler werden hierbei als maximale Differenzen über den gesamten Wellenlängenbereich zwischen den Wellenlängenkalibrationen der rechnerisch verbreiterten Spektren und der Wellenlängenkalibration beim Orginalspektrum berechnet. Der Fehler, welcher bei der Wellenlängenkalibration des Orginalspektrums berechnet wird, ist nicht miteinbezogen.

**Tabelle 1:**

| Bandbreite [nm] | Fehler Peaksuche-methode [nm] | Fehler erfindungsgemäße Methode [nm] |
|---|---|---|
| BW 6 | 1.42 | 0.021 |
| BW 7.5 | 2.04 | 0.027 |
| BW 9 | 3.13 | 0.030 |
| BW 12 | n.a. | 0.075 |

Für beide Wellenlängenkalibrationsverfahren wird der Fehler mit steigender Bandbreite größer. Bei der Peaksuchemethode liegt der Fehler zwischen 1.42 nm bei BW 6 und 3.13 nm beim Spektrum mit einer Bandbreite von 9 nm. Bei einer Bandbreite von 12 nm ist die Peaksuchemethode nicht mehr anwendbar, da es nicht genug geeignete Peaks zu deren Durchführung gibt.
Bei der erfindungsgemäßen Methode liegt der Fehler zwischen 0.021 nm bei BW 6 und 0.075 nm bei BW 12. Der Fehler ist also bei der erfindungsgemäßen Methode um ein vielfaches kleiner als beim Peaksucheverfahren. Daher können bei mit dieser Methode auch noch Spektrometer geringer optischer Güte, d.h. sehr breiter Bandbreite, ausreichend genau wellenlängenkalibriert werden.

## Patentansprüche

1. Verfahren zur Wellenlängenkalibration eines Spektrometers, auf welchem zumindest die Daten zweier Messwertblöcke eines Modellspektrums vorliegen,
umfassend die Schritte:
a. Bestimmung des Intensitätsspektrums einer Lichtquelle auf dem Spektrometer als Kalibrationsspektrum,
b. Ausschnitt eines Messwertblocks aus dem Kalibrationsspektrum, welcher zu einem der auf dem Spektrometer vorliegenden Messwertblöcke des Modellspektrums korrespondiert,
c. Schrittweise Relativ-Verschiebung des Messwertblocks des Kalibrationsspektrums zum Messwertsblock des Modellspektrums und jeweilige Bestimmung eines Korrelationswertes zwischen den beiden Messwertblöcken,
d. Ermittlung eines Verschiebungswerts, bei welchem der Korrelationswert ein Optimum erreicht,
e. Ermittlung eines Wertepaares bestehend aus Positionsmarkierung des Messwertsblocks des Modellspektrums und dem Verschiebungswert,
f. Wiederholung der Verfahrensschritte b. bis e. für alle weiteren Messwertblöcke des Modellspektrums
g. Fitting der in Verfahrensschritten b. bis f. erhaltenen Wertepaare, bestehend aus Positionsmarkierung des jeweiligen Messwertsblocks des Modellspektrums und dem zugeordneten Verschiebungswert, an eine Zuordnungsfunktion, wodurch die Koeffizienten a₀, a₁... erhalten werden
h. Verwendung dieser Koeffizienten zur Ermittlung einer Wellenlängenzuordnung des Spektrometers

2. Verfahren nach Anspruch 1 zur Wellenlängenkalibration eines Sekundärspektrometers, welches ein lineares Detektorarray als Detektionseinheit sowie einen Speicher besitzt, in welchem zumindest die Daten zweier Messwertblöcke eines Modellspektrums, welches auf einem Primärspektrometer als Intensitätsspektrum einer Lichtquelle bestimmt wurde, vorliegen, umfassend die Schritte:
a. Bestimmung des Intensitätsspektrums einer Lichtquelle auf dem Sekundärspektrometer als Kalibrationsspektrum, wobei die hierzu eingesetzte Lichtquelle und Detektionseinheit eine vergleichbare Bauart zu der zur Bestimmung des Modellspektrums verwendeten Lichtquelle und Detektionseinheit aufweisen und die Bestimmung des Kalibrationsspektrums unter vergleichbaren Bedingungen wie die Bestimmung des Modellspektrums erfolgt,
b. Ausschnitt eines Messwertblocks aus dem Kalibrationsspektrum, welcher zu einem der im Speicher des Sekundärspektrometer vorliegenden Messwertblöcke des Modellspektrums korrespondiert,
c. Schrittweise Relativ-Verschiebung des Messwertblocks des Kalibrationsspektrums zum Messwertsblock des Modellspektrums um jeweils einen einfachen- oder vielfachen Pixelwert und jeweilige Bestimmung eines Korrelationswertes zwischen den beiden Messwertblöcken, welcher ein Maß für die Übereinstimmung der Intensitätswerte der beiden Messwertblöcke ist,
d. Ermittlung eines Verschiebungswerts als Summe aus der Positionsmarkierung des Messwertblocks und des Abstands zwischen der Positionsmarkierung des Messwertsblocks des Modellspektrums und der korrespondierenden Positionsmarkierung des Kalibrationsspektrums, bei welchem der Korrelationswert ein Optimum erreicht,
e. Ermittlung eines Wertepaares bestehend aus Positionsmarkierung des Messwertsblocks des Modellspektrums und dem Verschiebungswert nach Verfahrensschritt d,
f. Wiederholung der Verfahrensschritte b. bis e. für alle weiteren Messwertblöcke des Modellspektrums
g. Ermittlung einer Wellenlängenzuordnung als eine Zuordnungsfunktion, deren Koeffizienten a₀, a₁... durch Fitting der in Verfahrensschritten b. bis f. erhaltenen Wertepaare, bestehend aus Positionsmarkierung des Messwertsblocks des Modellspektrums und dem zugeordneten Verschiebungswert, erhalten wurden.

3. Verfahren nach Anspruch 1 zur Wellenlängenkalibration eines Sekundärspektrometers, welches ein lineares Detektorarray als Detektionseinheit sowie einen Speicher besitzt, in welchem zumindest die Daten zweier Messwertblöcke eines Modellspektrums, welches auf einem Primärspektrometer als Intensitätsspektrum einer Lichtquelle bestimmt wurde, sowie eine erste Wellenlängenzuordnung in Form einer Zuordnungsfunktion mit den Koeffizienten a₀, a₁... vorliegen, umfassend die Schritte:
a. Bestimmung des Intensitätsspektrums einer Lichtquelle auf dem Sekundärspektrometer als Kalibrationsspektrum, wobei die hierzu eingesetzte Lichtquelle und Detektionseinheit eine vergleichbare Bauart zu der zur Bestimmung des Modellspektrums verwendeten Lichtquelle und Detektionseinheit aufweisen und die Bestimmung des Kalibrationsspektrums unter vergleichbaren Bedingungen wie die Bestimmung des Modellspektrums erfolgt,
b. Ausschnitt eines Messwertblocks aus dem Kalibrationsspektrum, welcher zu einem der im Speicher des Sekundärspektrometer vorliegenden Messwertblöcke des Modellspektrums korrespondiert,
c. Schrittweise Relativ-Verschiebung des Messwertblocks des Kalibrationsspektrums zum Messwertsblock des Modellspektrums um jeweils einen einfachen- oder vielfachen Pixelwert und jeweilige Bestimmung eines Korrelationswertes zwischen den beiden Messwertblöcken, welcher ein Maß für die Übereinstimmung der Intensitätswerte der beiden Messwertblöcke ist,
d. Ermittlung eines Verschiebungswerts als Summe aus der Positionsmarkierung des Messwertblocks des Modellspektrums und dem Abstand zwischen der Positionsmarkierung des Messwertsblocks des Modellspektrums und der korrespondierenden Positionsmarkierung des Kalibrationsspektrums, bei welchem der Korrelationswert ein Optimum erreicht,
e. Ermittlung eines Wertepaares bestehend aus Positionsmarkierung des Messwertsblocks des Modellspektrums und dem Verschiebungswert nach Verfahrensschritt d,
f. Wiederholung der Verfahrensschritte b. bis e. für alle weiteren Messwertblöcke des Modellspektrums,
g. Ermittlung von Korrekturkoeffizienten a₀', a₁'...durch Fitting der in den Verfahrensschritten b. bis f. erhaltenen Wertepaare, bestehend aus Positionsmarkierung des Messwertsblocks des Modellspektrums und dem zugeordneten Verschiebungswert, an eine Zuordnungsfunktion,
h. Ermittlung einer wellenlängenkalibrierten Wellenlängenzuordnung durch Ersetzen der Koeffizienten a₀, a₁...der ersten Wellenlängenzuordnung mit den entsprechenden in Verfahrensschritt g. ermittelten Korrekturkoeffizienten a₀', a₁'...

4. Verfahren nach Anspruch 1 zur Wellenlängenkalibration eines Sekundärspektrometers, welches ein lineares Detektorarray als Detektionseinheit sowie einen Speicher besitzt, in welchem zumindest die Daten zweier Messwertblöcke eines Modellspektrums, welches auf einem Primärspektrometer als Intensitätsspektrum einer Lichtquelle bestimmt wurde, sowie eine erste Wellenlängenzuordnung in Form einer Zuordnungsfunktion mit den Koeffizienten a₀, a₁... vorliegen, umfassend die Schritte:
a. Bestimmung des Intensitätsspektrums einer Lichtquelle auf dem Sekundärspektrometer als Kalibrationsspektrum, wobei die hierzu eingesetzte Lichtquelle und Detektionseinheit eine vergleichbare Bauart zu der zur Bestimmung des Modellspektrums verwendeten Lichtquelle und Detektionseinheit aufweisen und die Bestimmung des Kalibrationsspektrums unter vergleichbaren Bedingungen wie die Bestimmung des Modellspektrums erfolgt,
b. Ausschnitt eines Messwertblocks aus dem Kalibrationsspektrum, welcher zu einem der im Speicher des Sekundärspektrometer vorliegenden Messwertblöcke des Modellspektrums korrespondiert,
c. Schrittweise Relativ-Verschiebung des Messwertblocks des Kalibrationsspektrums zum Messwertsblock des Modellspektrums um jeweils einen einfachen- oder vielfachen Pixelwert und jeweilige Bestimmung eines Korrelationswertes zwischen den beiden Messwertblöcken, welcher ein Maß für die Übereinstimmung der Intensitätswerte der beiden Messwertblöcke ist,
d. Ermittlung eines Verschiebungswerts als Abstand zwischen der Positionsmarkierung des Messwertsblocks des Modellspektrums und der korrespondierenden Positionsmarkierung des Kalibrationsspektrums, bei welchem der Korrelationswert ein Optimum erreicht,
e. Ermittlung eines Wertepaares bestehend aus Positionsmarkierung des Messwertsblocks des Modellspektrums und dem Verschiebungswert nach Verfahrensschritt d,
f. Wiederholung der Verfahrensschritte b. bis e. für alle weiteren Messwertblöcke des Modellspektrums,
g. Ermittlung von Korrekturkoeffizienten Δa₀, Δa₁...durch Fitting der in den Verfahrensschritten b. bis f. erhaltenen Wertepaare, bestehend aus Positionsmarkierung des Messwertsblocks des Modellspektrums und dem zugeordneten Verschiebungswert, an eine Zuordnungsfunktion,
h. Ermittlung einer wellenlängenkalibrierten Wellenlängenzuordnung durch Kombination, insbesondere Addition, der in Verfahrensschritt g. ermittelten Korrekturkoeffizienten Δa₀, Δa₁...mit den entsprechenden Koeffizienten a₀, a₁...der ersten Wellenlängenzuordnung.

5. Verfahren nach einem der vorherigen Ansprüche,
**dadurch gekennzeichnet, dass**
die Zuordnungsfunktion ein Polynom mindestens 1. Grades, insbesondere ein Polynom 3. Grades, ist.

6. Verfahren nach einem der Ansprüche 3 bis 5,
**dadurch gekennzeichnet, dass**
für das Primärspektrometer eine Wellenlängenzuordnung vorliegt, welche mittels bekannter Kalibrationsverfahren, insbesondere Peaksucheverfahren, ermittelt wird und
bei vergleichbarer Bauart von Primär- und Sekundärspektrometer die erste Wellenlängenzuordnung des Sekundärspektrometers der Wellenlängenzuordnung des Primärspektrometers entspricht.

7. Verfahren nach einem der vorherigen Ansprüche,
**dadurch gekennzeichnet, dass**
das Modellspektrum durch Mitteln von Intensitätsspektren, die mit mehreren Lichtquellen gleicher Bauart, mehreren Detektionseinheiten gleicher Bauart oder mit mehreren Spektrometern gleicher Bauart gemessen wurden, gewonnen wird.

8. Verfahren nach einem der vorherigen Ansprüche,
**dadurch gekennzeichnet, dass**
die Daten der Messwertblöcke des Modellspektrums neben den primären Wertepaaren aus Pixelwert und Intensitätswert, welche direkt bei der Bestimmung des Modellspektrums ermittelt wurden, zusätzliche Wertepaare in Form interpolierter Pixelwerte und Intensitätswerte enthält, welche ebenfalls im Speicher des Spektrometers vorliegen und bei der Durchführung des Verfahrens berücksichtigt werden.

9. Verfahren nach einem der vorherigen Ansprüche,
**dadurch gekennzeichnet, dass**
die Messwertblöcke des Modellspektrums aus den Bereichen des Modellspektrums ausgewählt werden, welche einen differenzierten Verlauf, insbesondere hohe Intensitätsunterschiede oder geringes Rauschen oder wenig Streulicht, aufweisen.

10. Verfahren nach einem der vorherigen Ansprüche,
**dadurch gekennzeichnet, dass**
die Lichtquelle eine Spektrallampe, insbesondere eine Neon-, Argon- oder Quecksilber-Spektrallampe, ein Kombination einer breitbandigen Lichtquelle, insbesondere einer Halogenlichtquelle, mit einem Filter, insbesondere einem Seltenerdmetall-Filter, oder eine Kombination mehrerer wellenlängenstabilisierter Laser ist.

11. Verfahren nach einem der vorherigen Ansprüche,
**dadurch gekennzeichnet, dass**
die Bestimmung eines Korrelationswertes in Verfahrensschritt c. mittels eines Kreuzkorrelationsverfahrens, insbesondere mittels eines Kreuzkorrelationsverfahrens mit Mittelwertkorrektur und Normierung, erfolgt.
